(19) Europäisches Patentamt / European Patent Office / Office européen des brevets

(11) **EP 4 442 763 A1**

(12) **EUROPEAN PATENT APPLICATION**
published in accordance with Art. 153(4) EPC

(43) Date of publication:
**09.10.2024 Bulletin 2024/41**

(21) Application number: **22901328.9**

(22) Date of filing: **29.11.2022**

(51) International Patent Classification (IPC):
**C08L 67/02** (2006.01) **C08K 3/013** (2018.01)
**C08K 7/04** (2006.01)

(52) Cooperative Patent Classification (CPC):
**C08K 3/013; C08K 7/04; C08L 67/02;** Y02W 30/62

(86) International application number:
**PCT/JP2022/044037**

(87) International publication number:
**WO 2023/100896 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.11.2021 JP 2021195022
30.11.2021 JP 2021195023
30.11.2021 JP 2021195024
30.11.2021 JP 2021195025
03.06.2022 JP 2022090771

(71) Applicant: **Mitsubishi Chemical Corporation
Tokyo 100-8251 (JP)**

(72) Inventors:
- SUZUKI, Takayuki
  Hiratsuka-shi, Kanagawa 254-0016 (JP)
- KOBAYASHI, Rina
  Hiratsuka-shi, Kanagawa 254-0016 (JP)
- KURODA, Tatsuya
  Hiratsuka-shi, Kanagawa 254-0016 (JP)
- HIWATASHI, Yuki
  Hiratsuka-shi, Kanagawa 254-0016 (JP)

(74) Representative: **Hoffmann Eitle
Patent- und Rechtsanwälte PartmbB
Arabellastraße 30
81925 München (DE)**

(54) **RESIN COMPOSITION AND MOLDED ARTICLE**

(57) To provide a novel resin composition that contains a polyethylene terephthalate resin and a polybutylene terephthalate resin, as well as a molded article, a vehicle exterior component, and a light reflector component formed from such a resin composition. The resin composition contains a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) and/or an absolute value of a heat of crystallization during the heating phase in a second cycle ($\Delta H_{Tc1}$-2nd) of the operation of less than 3 J/g.

EP 4 442 763 A1

**Description**

[Technical Field]

The present invention relates to a resin composition, a molded article, a vehicle exterior component, and a light reflector component. In particular, the present invention relates to a resin composition that includes a polyester resin.

[Background Art]

Polyester resins have excellent mechanical performance, electrical properties, processing properties, and the like, and are widely used for various purposes.

Examples of known polyester resins include polyethylene terephthalate resins and polybutylene terephthalate resins. In particular, resin compositions that contain a polyethylene terephthalate resin and a polybutylene terephthalate resin have been studied (Patent Literature 1 to Patent Literature 3).

[Citation List]

[Patent Literature]

[Patent Literature 1]
International Publication No. WO 2019/217680
[Patent Literature 2]
Japanese Patent Laid-Open No. 2018-203932A A
[Patent Literature 3]
International Publication No. WO 2020/246335

[Summary of the Invention]

[Object of the Invention]

Here, as resin compositions including a polyethylene terephthalate resin and a polybutylene terephthalate resin have come to be used frequently, there have been demands for better performance. However, it is recognized that there are cases in which such demands cannot be fully satisfied.

It is an object of the present invention to solve this problem, and the present invention provides a novel resin composition that contains a polyethylene terephthalate resin and a polybutylene terephthalate resin, as well as a molded article, a vehicle exterior component, and a light reflector component formed from such a resin composition.

[Solution to Problem]

The present inventors conducted research to address the above-mentioned problems, and as a result, discovered that a novel resin composition that has various excellent properties could be obtained by using a predetermined polyethylene terephthalate resin. Specifically, the problems described above are solved by the following means.

<1> A resin composition comprising a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) and/or an absolute value of a heat of crystallization during the heating phase in a second cycle ($\Delta H_{Tc1}$-2nd) of the operation of less than 3 J/g.

<2> The resin composition according to <1> comprising a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g.

<3> The resin composition according to <1> comprising a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value a heat of crystallization during the heating phase in a second cycle ($\Delta H_{Tc1}$-2nd) of the operation of less than 3 J/g.

<4> The resin composition according to any one of <1> to <3>, wherein the polyethylene terephthalate resin comprises a unit derived from an isophthalic acid, and the unit derived from the isophthalic acid is 0.5 mol% or more and 15 mol% or less of all units derived from a dicarboxylic acid component contained in the polyethylene terephthalate resin.

<5> The resin composition according to any one of <1> to <4>, wherein the polyethylene terephthalate resin has an intrinsic viscosity of 0.60 dL/g or more (preferably more than 0.70 dL/g).

<6> The resin composition according to any one of <1> to <5>, which comprises from 1 to 150 parts by mass of a fibrous inorganic filler with respect to a total of 100 parts by mass of the polybutylene terephthalate resin and the polyethylene terephthalate resin.

<7> The resin composition according to any one of <1> to <6>, which comprises from 1 to 100 parts by mass of a non-fibrous inorganic filler with respect to a total of 100 parts by mass of the polybutylene terephthalate resin and the polyethylene terephthalate resin.

<8> The resin composition according to <7>, wherein the non-fibrous inorganic filler comprises a particulate filler.

<9> The resin composition according to any one of <1> to <8>, wherein the polyethylene terephthalate resin comprises a recycled product.

<10> The resin composition according to any one of <1> to <9>, wherein the polyethylene terephthalate resin contains a recycled product, and a content of a cyclic trimer contained in the polyethylene terephthalate resin is 0.8% by mass or less.

<11> The resin composition according to any one of <1> to <10>, wherein the polyethylene terephthalate resin comprises a polyethylene terephthalate resin in which at least a part of a raw material is a bio-derived raw material.

<12> The resin composition according to any one of <1> to <11>, wherein a proportion of the polyethylene terephthalate resin with respect to a total of 100 parts by mass of the polybutylene terephthalate resin and the polyethylene terephthalate resin is less than 50 parts by mass.

<13> The resin composition according to any one of <1> to <12>, wherein a proportion of the polyethylene terephthalate resin with respect to a total of 100 parts by mass of the polybutylene terephthalate resin and the polyethylene terephthalate resin is more than 50 parts by mass.

<14> The resin composition according to any one of <1> to <13>, which comprises from 0.01 to 8 parts by mass of carbon black with respect to a total of 100 parts by mass of the polybutylene terephthalate resin and the polyethylene terephthalate resin.

<15> The resin composition according to any one of <1> to <14>, which comprises from 0.01 to 15 parts by mass of a reactive compound with respect to a total of 100 parts by mass of the polybutylene terephthalate resin and the polyethylene terephthalate resin.

<16> The resin composition according to any one of <1> to <15>, wherein the reactive compound is an epoxy compound.

<17> The resin composition according to any one of any one of <1> to <16>, which further comprises from 0.01 to 2.0 parts by mass of a stabilizer with respect to a total of 100 parts by mass of the polybutylene terephthalate resin and the polyethylene terephthalate resin.

<18> The resin composition according to any one of <1> to <17>, wherein the polyethylene terephthalate resin comprises a unit derived from an isophthalic acid, and the unit derived from the isophthalic acid is 0.5 mol% or more and 15 mol% or less of all units derived from a dicarboxylic acid component contained in the polyethylene terephthalate resin,

the polyethylene terephthalate resin has an intrinsic viscosity of 0.60 dL/g or more (preferably more than 0.70 dL/g),
the polyethylene terephthalate resin comprises a recycled product,
a content of a cyclic trimer contained in the polyethylene terephthalate resin is 0.8% by mass or less, and

the resin composition further comprises from 0.01 to 8 parts by mass of carbon black with respect to a total of 100 parts by mass of the polybutylene terephthalate resin and the polyethylene terephthalate resin.

<19> A molded article formed from the resin composition of any one of <1> to <18>.

<20> A vehicle exterior component formed from the resin composition of any one of <1> to <18>.

<21> A light reflector component formed from the resin composition of any one of <1> to <18>.

<2-1> A resin composition including a polybutylene terephthalate resin and a polyethylene terephthalate resin, wherein

a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g.

<2-2> The resin composition according to <2-1>, wherein the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin.

<2-3> The resin composition according to <2-1> or <2-2>, wherein the polyethylene terephthalate resin has an intrinsic viscosity of 0.60 dL/g or more (preferably more than 0.70 dL/g).

<2-4> The resin composition according to any one of <2-1> to <2-3>, wherein the polyethylene terephthalate resin contains a recycled product.

<2-5> The resin composition according to any one of <2-1> to <2-4>, wherein the polyethylene terephthalate resin includes a polyethylene terephthalate resin in which at least a part of a raw material is a bio-derived raw material.

<2-6> The resin composition according to any one of <2-1> to <2-5>, wherein a proportion of the polyethylene terephthalate resin with respect to a total of 100 parts by mass of the polybutylene terephthalate resin and the polyethylene terephthalate resin is less than 50 parts by mass.

<2-7> The resin composition according to any one of <2-1> to <2-6>, wherein

the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin,

the polyethylene terephthalate resin has an intrinsic viscosity of 0.60 dL/g or more (preferably more than 0.70 dL/g), and

a proportion of the polyethylene terephthalate resin with respect to a total of 100 parts by mass of the polybutylene terephthalate resin and the polyethylene terephthalate resin is less than 50 parts by mass.

<2-8> The resin composition according to <2-7>, wherein the polyethylene terephthalate resin contains a recycled product.

<2-9> The resin composition according to <2-7>, wherein the polyethylene terephthalate resin contains a recycled product, and a content of a cyclic trimer contained in the polyethylene terephthalate resin is 0.8% by mass or less.

<2-10> The resin composition according to <2-7>, wherein the polyethylene terephthalate resin includes a polyethylene terephthalate resin in which at least a part of a raw material is a bio-derived raw material.

<2-11> The resin composition according to any one of <2-1> to <2-10>, which includes from 0.01 to 4 parts by mass of carbon black with respect to a total of 100 parts by mass of the polybutylene terephthalate resin and the polyethylene terephthalate resin.

<2-12> The resin composition according to any one of <2-1> to <2-11>, wherein

the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin,

the polyethylene terephthalate resin has an intrinsic viscosity of 0.60 dL/g or more (preferably more than 70 dL/g),

a proportion of the polyethylene terephthalate resin with respect to a total of 100 parts by mass of the polybutylene terephthalate resin and the polyethylene terephthalate resin is less than 50 parts by mass,
the polyethylene terephthalate resin contains a recycled product, and a content of a cyclic trimer contained in the polyethylene terephthalate resin is 0.8% by mass or less, and
the resin composition includes from 0.01 to 4 parts by mass of carbon black with respect to a total of 100 parts by mass of the polybutylene terephthalate resin and the polyethylene terephthalate resin.

<2-13> The resin composition according to any one of <2-1> to <2-12>, which is for a vehicle component.

<2-14> The resin composition according to any one of <2-1> to <2-12>, which is for a vehicle lamp component.

<2-15> A molded article formed from the resin composition of any one of <2-1> to <2-12>.

<2-16> A light reflector component formed from the resin composition of any one of <2-1> to <2-12>.

<2-17> A pellet of the resin composition of any one of <2-1> to <2-12>.

<2-18> A molded article formed from the pellet of <2-17>.

<3-1> A resin composition including a polybutylene terephthalate resin and a polyethylene terephthalate resin, wherein

a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and
when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a second cycle ($\Delta H_{Tc1}$-2nd) of the operation of less than 3 J/g.

<3-2> The resin composition according to <3-1>, wherein the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin.

<3-3> The resin composition according to <3-1> or <3-2>, wherein the polyethylene terephthalate resin has an intrinsic viscosity of 0.60 dL/g or more (preferably more than 0.70 dL/g).

<3-4> The resin composition according to any one of <3-1> to <3-3>, wherein the resin composition further includes from 1 to 150 parts by mass of a fibrous inorganic filler with respect to a total of 100 parts by mass of the polybutylene terephthalate resin and the polyethylene terephthalate resin.

<3-5> The resin composition according to any one of <3-1> to <3-4>, wherein the polyethylene terephthalate resin contains a recycled product.

<3-6> The resin composition according to any one of <3-1> to <3-5>, wherein a proportion of the polyethylene terephthalate resin with respect to a total of 100 parts by mass of the polybutylene terephthalate resin and the polyethylene terephthalate resin is more than 50 parts by mass.

<3-7> The resin composition according to any one of <3-1> to <3-6>, which includes from 0.01 to 8 parts by mass of carbon black with respect to a total of 100 parts by mass of the polybutylene terephthalate resin and the polyethylene terephthalate resin.

<3-8> The resin composition according to any one of <3-1> to <3-7>, which includes from 0.01 to 15 parts by mass of a reactive compound with respect to a total of 100 parts by mass of the polybutylene terephthalate resin and the polyethylene terephthalate resin.

<3-9> The resin composition according to any one of <3-1> to <3-8>, which further includes from 0.01 to 2 parts by mass of a stabilizer with respect to a total of 100 parts by mass of the polybutylene terephthalate resin and the polyethylene terephthalate resin.

<3-10> The resin composition according to any one of <3-1> to <3-9>, wherein

the polyethylene terephthalate resin includes a unit derived from an isophthalic acid, and the unit derived from the isophthalic acid is 0.5 mol% or more and 15 mol% or less of all units derived from a dicarboxylic acid component contained in the polyethylene terephthalate resin,
the polyethylene terephthalate resin has an intrinsic viscosity of 0.60 dL/g or more (preferably more than 0.70 dL/g) and further includes from 1 to 150 parts by mass of a fibrous inorganic filler with respect to a total of 100 parts by mass of the polybutylene terephthalate resin and the polyethylene terephthalate resin,

the polyethylene terephthalate resin contains a recycled product,
a proportion of the polyethylene terephthalate resin with respect to a total of 100 parts by mass of the polybutylene terephthalate resin and the polyethylene terephthalate resin is more than 50 parts by mass,
the resin composition further includes from 0.01 to 8 parts by mass of carbon black with respect to a total of 100 parts by mass of the polybutylene terephthalate resin and the polyethylene terephthalate resin,
the resin composition further includes from 0.01 to 15 parts by mass of a reactive compound with respect to a total of 100 parts by mass of the polybutylene terephthalate resin and the polyethylene terephthalate resin, and
the resin composition further includes from 0.01 to 2.0 parts by mass of a stabilizer with respect to a total of 100 parts by mass of the polybutylene terephthalate resin and the polyethylene terephthalate resin.

<3-11> The resin composition according to any one of <3-1> to <3-10>, which is for a vehicle exterior component.
<3-12> A molded article formed from the resin composition of any one of <3-1> to <3-10>.
<3-13> A vehicle exterior component formed from the resin composition of any one of <3-1> to <3-10>.
<3-14> A pellet of the resin composition of any one of <3-1> to <3-10>.
<3-15> A molded article formed from the pellet of <3-14>.

<4-1> A resin composition including from 1 to 150 parts by mass of a fibrous inorganic filler with respect to a total of 100 parts by mass of a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, the polyethylene terephthalate resin has an intrinsic viscosity of 0.60 dL/g or more (preferably more than 0.70 dL/g), the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin.
<4-2> The resin composition according to <4-1>, wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g.
<4-3> The resin composition according to <4-1> or <4-2>, wherein the polyethylene terephthalate resin contains a recycled product.
<4-4> The resin composition according to any one of <4-1> to <4-3>, wherein a proportion of the polyethylene terephthalate resin with respect to a total of 100 parts by mass of the polybutylene terephthalate resin and the polyethylene terephthalate resin is more than 50 parts by mass and 90 parts by mass or less.
<4-5> The resin composition according to any one of <4-1> to <4-3>, wherein a proportion of the polyethylene terephthalate resin with respect to a total of 100 parts by mass of the polybutylene terephthalate resin and the polyethylene terephthalate resin is 10 parts by mass or more and less than 50 parts by mass.
<4-6> The resin composition according to any one of <4-1> to <4-5>, wherein the fibrous inorganic filler has a content of from 20 to 40% by mass with respect to the resin composition.
<4-7> The resin composition according to <4-1>, wherein

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g,
the polyethylene terephthalate resin contains a recycled product,
a proportion of the polyethylene terephthalate resin with respect to a total of 100 parts by mass of the polybutylene terephthalate resin and the polyethylene terephthalate resin is more than 50 parts by mass and 90 parts by mass or less,
a proportion of the polyethylene terephthalate resin with respect to a total of 100 parts by mass of the polybutylene terephthalate resin and the polyethylene terephthalate resin is 10 parts by mass or more and less than 50 parts by mass, and
the fibrous inorganic filler has a content of from 20 to 40% by mass with respect to the resin composition.

<4-8> A pellet of the resin composition of any one of <4-1> to <4-7>.

<4-9> A molded article formed from the resin composition of any one of <4-1> to <4-7>.

<4-10> A molded article formed from the pellet of <4-8>.

<5-1> A resin composition including from 1 to 100 parts by mass of a non-fibrous inorganic filler with respect to a total of 100 parts by mass of a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin.

<5-2> The resin composition according to <5-1>, wherein the polyethylene terephthalate resin has an intrinsic viscosity of 0.60 dL/g or more (preferably more than 0.70 dL/g).

<5-3> The resin composition according to <5-1> or <5-2>, wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g.

<5-4> The resin composition according to any one of <5-1> to <5-3>, wherein the polyethylene terephthalate resin contains a recycled product.

<5-5> The resin composition according to any one of <5-1> to <5-4>, wherein the non-fibrous inorganic filler contains a particulate filler.

<5-6> The resin composition according to any one of <5-1> to <5-5>, wherein the polyethylene terephthalate resin contains a recycled product, and a content of a cyclic trimer contained in the polyethylene terephthalate resin is 0.8% by mass or less.

<5-7> The resin composition according to any one of <5-1> to <5-6>, which includes from 0.01 to 4 parts by mass of carbon black with respect to a total of 100 parts by mass of the polybutylene terephthalate resin and the polyethylene terephthalate resin.

<5-8> The resin composition according to <5-1> to <5-7>, wherein

the polyethylene terephthalate resin has an intrinsic viscosity of 0.60 dL/g or more (preferably more than 0.70 dL/g),

when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g,

the non-fibrous inorganic filler contains a particulate filler,

the polyethylene terephthalate resin contains a recycled product, and a content of a cyclic trimer contained in the polyethylene terephthalate resin is 0.8% by mass or less, and

the resin composition includes from 0.01 to 4 parts by mass of carbon black with respect to a total of 100 parts by mass of the polybutylene terephthalate resin and the polyethylene terephthalate resin.

<5-9> The resin composition according to any one of <5-1> to <5-8>, which is for a vehicle component or an electric/electronic component.

<5-10> The resin composition according to any one of <5-1> to <5-9>, which is for a vehicle lamp component.

<5-11> A pellet of the resin composition of any one of <5-1> to <5-10>.

<5-12> A molded article formed from the resin composition of any one of <5-1> to <5-11>.

<5-13> A molded article formed from the pellet of <5-11>.

<5-14> A light reflector component formed from the resin composition of any one of <5-1> to <5-13>.

[Advantageous Effects of Invention]

According to the present invention, it is possible to provide a novel resin composition that includes a polyethylene terephthalate resin and a polybutylene terephthalate resin and that has various excellent properties, as well as a molded article, a vehicle exterior component, and a light reflector component formed from such a resin composition.

[Description of Embodiments]

A mode for carrying out the present invention (hereinafter, simply referred to as "this embodiment") will now be described in detail. It is noted that this embodiment is an illustrative example for describing the present invention, and the present invention is not limited to only this embodiment.

In addition, in this specification, the meaning of "from ... to" includes the numerical values described before and after "..." as a lower limit value and an upper limit value.

In this specification, various physical property values and characteristic values are assumed to be values as of 23°C, unless otherwise stated.

In this specification, the weight average molecular weight and number average molecular weight are, unless otherwise specified, polystyrene equivalent values measured by GPC (gel permeation chromatography).

If the measurement methods and the like described in the standards shown in this specification differ from year to year, unless otherwise stated, those measurement standards shall be based on the standards as of January 1, 2021.

The resin composition of this embodiment is characterized by including a polybutylene terephthalate resin and a polyethylene terephthalate resin, wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) and/or an absolute value of a heat of crystallization during the heating phase in a second cycle ($\Delta H_{Tc1}$-2nd) of the operation of less than 3 J/g.

In this embodiment, the following first to third embodiments are preferred.

1. Resin composition of first embodiment

The resin composition of the first embodiment is characterized in that, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g.

With such a configuration, a molded article having excellent mold release properties can be obtained. The reason why a molded article having excellent mold release properties can be obtained is inferred to be that the resin crystallizes more easily.

In addition, with such a configuration, surprisingly, a molded article having a large nominal strain at break can be obtained.

Further, from the resin composition of the first embodiment, a molded article having a low molding shrinkage rate and a molded article having excellent mold deposit can be obtained.

<Polybutylene terephthalate resin>

Polybutylene terephthalate resin used in the resin composition of the first embodiment is a polyester resin having a structure in which a terephthalic acid unit and a 1,4-butanediol unit are joined by an ester bond. Examples of the resin composition include, in addition to a polybutylene terephthalate resin (homopolymer), polybutylene terephthalate copolymers containing a copolymer component other than the terephthalic acid unit and the 1,4-butanediol unit, and mixtures of homopolymers and polybutylene terephthalate copolymers.

The polybutylene terephthalate resin may contain one or more dicarboxylic acid units other than terephthalic acid.

Specific examples of other dicarboxylic acids include aromatic dicarboxylic acids such as isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracene dicarboxylic acid, and 4,4'-diphenyl ether dicarboxylic acid, alicyclic dicarboxylic acids such as 1,4-cyclohexanedicarboxylic acid and 4,4'-dicyclohexyldicarboxylic acid, aliphatic dicarboxylic acids such as adipic acid, sebacic acid, azelaic acid, and dimer acid, and the like.

In the polybutylene terephthalate resin used in the first embodiment, the terephthalic acid unit preferably accounts for, of all the dicarboxylic acid units, 80 mol% or more, more preferably 90 mol% or more, and further preferably 95 mol% or more, and may be 99 mol% or more.

The diol unit may contain one or more other diol units in addition to 1,4-butanediol.

Specific examples of other diol units include aliphatic or alicyclic diols having from 2 to 20 carbon atoms, bisphenol derivatives, and the like. Specific examples include ethylene glycol, propylene glycol, 1,5-pentanediol, 1,6-hexanediol, neopentyl glycol, decamethylene glycol, cyclohexanedimethanol, 4,4'-dicyclohexylhydroxymethane, 4,4'-dicyclohexylhydroxypropane, ethylene oxide-added diol of bisphenol A, and the like. Further, in addition to the above-described bifunctional monomers, a small amount of a trifunctional monomer such as trimellitic acid, trimesic acid, pyromellitic acid, pentaerythritol, and trimethylolpropane can be used in combination to introduce a branched structure, and a small amount of a monofunctional compound such as a fatty acid can be used in combination to adjust the molecular weight.

In the polybutylene terephthalate resin used in the first embodiment, the 1,4-butanediol unit preferably accounts for, of all the diol units, 80 mol% or more, more preferably 90 mol% or more, and further preferably 95 mol% or more, and may be 99 mol% or more.

As described above, the polybutylene terephthalate resin is preferably a polybutylene terephthalate homopolymer obtained by polycondensing a terephthalic acid and 1,4-butanediol. Further, the polybutylene terephthalate resin may be a polybutylene terephthalate copolymer containing one or more dicarboxylic acids other than the terephthalic acid as a carboxylic acid unit and/or one or more diols other than the 1,4-butanediol as a diol unit. When the polybutylene terephthalate resin is a polybutylene terephthalate resin modified by copolymerization, specific examples of preferred copolymers include a polyester ether resin copolymerized with a polyalkylene glycol, in particular polytetramethylene glycol, a dimer acid copolymerized polybutylene terephthalate resin, and an isophthalic acid copolymerized polybutylene terephthalate resin. Among these, it is preferred to use a polyester ether resin copolymerized with polytetramethylene glycol.

In addition, when the polybutylene terephthalate resin is a copolymer, this refers to an amount of copolymerization that is 1 mol% or more and less than 50 mol% of the total units of the polybutylene terephthalate resin. Within that, the amount of copolymerization is preferably 2 mol% or more and less than 50 mol%, more preferably from 3 to 40 mol%, and further preferably from 5 to 20 mol%. Such a copolymerization proportion is preferred because a molded article having low molding shrinkage and high impact resistance can be obtained.

The terminal carboxyl group content of the polybutylene terephthalate resin may be appropriately selected and determined, but the terminal carboxyl group content is usually 60 eq/ton or less, preferably 50 eq/ton or less, and more preferably 30 eq/ton or less. By setting the terminal carboxyl group content to be equal to or less than above upper limit, alkali resistance and hydrolysis resistance tend to improve. Although the lower limit of the terminal carboxyl group content is not particularly limited, the lower limit is preferably 5 eq/ton or more in consideration of the productivity of producing the polybutylene terephthalate resin.

The terminal carboxyl group content of the polybutylene terephthalate resin is a value measured by dissolving 0.5 g of the polybutylene terephthalate resin in 25 mL of benzyl alcohol, and titrating the resultant solution using a 0.01 mol/L solution of sodium hydroxide in benzyl alcohol. The terminal carboxyl group content can be adjusted by any conventionally known method, such as a method of adjusting polymerization conditions such as raw material charge ratio, and polymerization temperature, and pressure reduction method during polymerization, and a method of reacting with a terminal blocking agent.

The intrinsic viscosity of the polybutylene terephthalate resin is preferably from 0.5 to 2 dL/g. From the viewpoint of moldability and mechanical properties, the intrinsic viscosity of the polybutylene terephthalate resin is more preferably in the range of 0.6 to 1.5 dL/g. By setting the intrinsic viscosity to 0.5 dL/g or more, the mechanical strength of the resin composition obtained tends to be further improved. Further, by setting the intrinsic viscosity to 2 dL/g or less, the fluidity of the resin composition tends to be further improved, and moldability tends to be to improved.

When the resin composition of the first embodiment contains two or more types of polybutylene terephthalate resins, the intrinsic viscosity is the intrinsic viscosity of the mixture.

The intrinsic viscosity is measured according to the description in the working examples below.

The polybutylene terephthalate resin is produced by batchwise or continuous melt polymerization of a dicarboxylic acid component having a terephthalic acid as a main component or an ester derivative thereof and a diol component having 1,4-butanediol as a main component. Further, after producing a low molecular weight polybutylene terephthalate resin by melt polymerization, the degree of polymerization (or molecular weight) can be increased to a desired value by further performing solid phase polymerization under a nitrogen stream or under reduced pressure.

The polybutylene terephthalate resin is preferably obtained by a production method in which a dicarboxylic acid component having a terephthalic acid as a main component and a diol component having 1,4-butanediol as a main component are melt-polycondensed in a continuous or batch method.

The catalyst used in carrying out the esterification reaction may be a conventionally known catalyst, and examples thereof include titanium compounds, tin compounds, magnesium compounds, calcium compounds, and the like. Particularly preferred among these are titanium compounds. Specific examples of the titanium compound as the esterification catalyst include titanium alcoholates such as tetramethyl titanate, tetraisopropyl titanate, and tetrabutyl titanate, and titanium phenolates such as tetraphenyl titanate.

<Polyethylene terephthalate resin>

The polyethylene terephthalate resin is a resin having a dicarboxylic acid and a diol as main constituent units. When one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin used in the first embodiment has an absolute value of a heat of crystallization during a heating phase in a first cycle (hereinafter, sometimes referred to as "$\Delta H_{Tc1}$-1st") of the operation of less than 3 J/g. That is, it is preferred that a clear crystallization temperature (Tc1-1st) during the heating phase is not exhibited. By using such a resin, moldability tends to be improved. The reason for this is inferred to be that crystallization or solidification is more likely to occur during molding. By using such a specific polyethylene terephthalate resin, the resin tends to crystallize easily, and thus a molded article having excellent mold release properties tends to be obtained.

As the polyethylene terephthalate resin (hereinafter, sometimes referred to as "PET"), a virgin product (hereinafter, sometimes referred to as "virgin PET"), a recycled product (hereinafter, referred to as "recycled PET"), a bio-derived product (hereinafter, sometimes referred to as "bio-PET"), and a mixture thereof can be used. It is noted that bio-PET refers to a polyethylene terephthalate resin in which at least a part of the raw material is derived from a biological resource (biomass).

Examples of the recycled PET include PET obtained through material recycling, in which collected used PET bottles and films are crushed, washed with water or an alkali, and turned into fibers for reuse, PET obtained through chemical recycling (chemical decomposition), and PET obtained through mechanical recycling.

Chemical recycling involves chemically decomposing collected used PET bottles, films, and the like, returning them to a raw material level, and resynthesizing polyethylene terephthalate resin. On the other hand, mechanical recycling is a method that makes it possible to remove dirt from polyethylene terephthalate resin more reliably than material recycling, by performing the above-mentioned alkaline cleaning in material recycling more strictly or by vacuum drying at high temperature.

For example, after removing foreign substances from used PET bottles, the bottles are crushed and washed, then pelletized using an extruder, crystallized in an environment of approximately 120 to 150°C, and then subjected to solid phase polymerization in an environment of about 210°C under a nitrogen stream or under high vacuum to obtain recycled PET.

Examples of bio-PET include PET produced by replacing monoethylene glycol, which is a raw material for PET, with a bio-raw material derived from sugar cane.

In addition, the polyethylene terephthalate resin used in the first embodiment preferably has an absolute value of the heat of crystallization during a cooling phase in the first cycle (hereinafter sometimes referred to as "$\Delta H_{Tc2}$-1st") of 3 J/g or more. That is, it is preferred to have a clear crystallization temperature during the cooling phase (Tc2-1st). Using such a resin tends to facilitate crystallization, improve mold release properties, and improve moldability. Further, the Tc2-1st is preferably 160°C or higher, and more preferably 170°C or higher. By setting the Tc2-1st to be equal to or higher than the above lower limit, crystallization tends to be facilitated and mold release properties tend to be further improved. Further, the Tc2-1st is preferably 195°C or lower, and more preferably 186°C or lower. By setting the Tc2-1st to be equal to or lower than the above upper limit, the molding shrinkage rate tends to become smaller.

As such a polyethylene terephthalate resin, recycled PET, in particular recycled PET derived from PET bottles, is preferred.

The polyethylene terephthalate resin used in the first embodiment has a melting point in the first cycle (Tm-1st) of preferably 254°C or lower, more preferably 252°C or lower, further preferably 250°C or lower, and may be 245°C or lower, or 242°C or lower. By setting the melting point to be equal to or less than the above upper limit, molding can be performed at a lower resin temperature, and so moldability tends to be further improved. Further, the toughness of the resin composition tends to be improved. The lower limit is preferably 230°C or higher, and more preferably 235°C or higher. By setting the melting point to be equal to or more than the above lower limit, the mold release properties tend to be further improved. Moreover, the rigidity of the resin composition tends to be improved. If two or more melting peaks are observed, the lower temperature is taken as the melting point (Tm-1st).

When one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min, the polyethylene terephthalate resin used in the first embodiment preferably has an absolute value of the heat of crystallization during the heating phase in a second cycle ("$\Delta H_{Tc1}$-2nd") of the operation of less than 3 J/g. That is, it is preferred that a clear crystallization temperature (Tc1-2nd) during the heating phase is not exhibited. Having such a configuration tends to facilitate crystallization, improve mold release properties, and improve moldability.

As such a polyethylene terephthalate resin, bio-PET or recycled PET is preferred, and in particular recycled PET derived from PET bottles is preferred.

In addition, the polyethylene terephthalate resin used in the first embodiment preferably has an absolute value of the heat of crystallization during a cooling phase in the second cycle ("$\Delta H_{Tc2}$-2nd") of 3 J/g or more. That is, it is preferred to have a clear crystallization temperature during the cooling phase (Tc2-2nd). Having such a configuration tends to facilitate crystallization, improve mold release properties, and improve moldability. Further, the crystallization temperature during the cooling phase in the second cycle (Tc2-2nd) is preferably 150°C or higher, and more preferably 160°C or higher. By setting the Tc2-2nd to be equal to or higher than the above lower limit, crystallization tends to be facilitated and mold release properties tend to be further improved. Moreover, the Tc2-2nd is preferably 190°C or lower, more preferably 185°C or lower, further preferably 180°C or lower, still further preferably 175°C or lower, and may be 170°C or lower. By setting the Tc2-2nd to be equal to or lower than the above upper limit, the molding shrinkage rate tends to become smaller.

As such a polyethylene terephthalate resin, recycled PET, in particular recycled PET derived from PET bottles, is preferred.

The polyethylene terephthalate resin used in the first embodiment has a melting point in the second cycle (Tm-2nd) of preferably 254°C or lower, more preferably 252°C or lower, and further preferably 250°C or lower. By setting the melting point to be equal to or less than the above upper limit, molding can be performed at a lower resin temperature, and so moldability tends to be further improved. The lower limit of the Tm-2nd is preferably 230°C or higher, and more preferably 235°C or higher. By setting the melting point to be equal to or more than the above lower limit, the mold release properties tend to be further improved. If two or more melting peaks are observed, the lower temperature is taken as the melting point (Tm-2nd).

The polyethylene terephthalate resin used in the first embodiment preferably has an absolute value of the heat of crystallization ($\Delta H_{Tc1}$-1st) during the heating phase in the first cycle of less than 3 J/g and an absolute value of the heat of crystallization ($\Delta H_{Tc2}$-1st) during the cooling phase in the first cycle of 3 J/g or more. That is, it is preferred that a clear crystallization temperature during the heating phase (Tc1-1st) is not exhibited and that there is a clear crystallization temperature during the cooling phase (Tc2-1st). By using such a polyethylene terephthalate resin, the effects of improved mold release properties and improved surface appearance can be exhibited better.

In addition, the polyethylene terephthalate resin used in the first embodiment preferably has an absolute value of the heat of crystallization ($\Delta H_{Tc1}$-2nd) during the heating phase in the second cycle of less than 3 J/g and an absolute value of the heat of crystallization ($\Delta H_{Tc2}$-2nd) during the cooling phase in the second cycle of 3 J/g or more. That is, it is preferred that a clear crystallization temperature during the heating phase (Tc1-2nd) is not exhibited in the second cycle, and that there is a clear crystallization temperature during the cooling phase (Tc2-2nd) in the second cycle. By using such a polyethylene terephthalate resin, the effects of improved mold release properties and improved surface appearance can be exhibited better.

As such a polyethylene terephthalate resin, recycled PET, in particular recycled PET derived from PET bottles, is preferred.

On the other hand, a general polyethylene terephthalate resin (for example, virgin polyethylene terephthalate resin) exhibits a clear crystallization temperature (Tc1-1st) during the heating phase in the first cycle, and the absolute value of the heat of crystallization ($\Delta H_{Tc1}$-1st) is 3 J/g or more. Further, while a general polyethylene terephthalate resin tends to exhibit a clear crystallization temperature (Tc1-2nd) during the heating phase in the second cycle, recycled polyethylene terephthalate does not tend to do so. In addition, while a general polyethylene terephthalate resin tends not to exhibit a clear crystallization temperature (Tc2-1st) during the cooling phase in the first cycle, a recycled polyethylene terephthalate resin does tend to do so. Moreover, while a general polyethylene terephthalate resin does not tend to exhibit a clear crystallization temperature (Tc2-2nd) during the cooling phase in the second cycle, a recycled polyethylene terephthalate tends to do so.

The resin composition of the first embodiment preferably further contains a polyethylene terephthalate resin having, based on all units derived from the dicarboxylic acid component, 0.5 mol% or more and 15 mol% or less of a unit derived from an isophthalic acid (hereinafter, sometimes referred to as "isophthalic acid unit"). By using such a specific polyethylene terephthalate resin, crystallization as a whole can be suppressed, and as a result a molded article having a smaller molding shrinkage rate and higher impact resistance tends to be obtained.

The proportion of the isophthalic acid unit is, of all units derived from the dicarboxylic acid component, preferably 0.7 mol% or more, more preferably 0.9 mol% or more, further preferably 1.1 mol% or more, still further preferably 1.3 mol% or more, and still further preferably 1.5 mol% or more. By setting the proportion to be equal to or more than the above lower limit, the molding shrinkage rate tends to decrease, the impact resistance of the molded article tends to be improved, and the nominal tensile strain at break tends to be improved.

Further, the proportion of the isophthalic acid unit is, of all units derived from the dicarboxylic acid component, preferably, in order, 10.0 mol% or less, 8.0 mol% or less, 5.0 mol% or less, 4.0 mol% or less, or 3.5 mol% or less, more preferably 3.0 mol% or less, and further preferably 2.5 mol% or less, still further preferably 2.3 mol% or less, and still further preferably 2.0 mol% or less. By setting the proportion to be equal to or less than the above upper limit, the solidification rate tends to be improved, and moldability, such as mold release properties during injection molding, tends to be improved.

The intrinsic viscosity of the polyethylene terephthalate resin is preferably 0.50 dL/g or more, more preferably 0.60 dL/g or more, further preferably 0.63 dL/g or more, still further preferably more than 0.70 dL/g, still further preferably 0.73 dL/g or more, still further preferably more than 0.76 dL/g, particularly preferably 0.78 dL/g or more, and particularly further preferably 0.80 dL/g or more. By setting the intrinsic viscosity to be equal to or more than the above lower limit, the impact resistance of the obtained molded article tends to be further improved, the shrinkage rate tends to be smaller, and the nominal tensile strain at break tends to be improved. The reason for this is inferred to be due to the fact that intrinsic viscosity has a positive correlation with molecular weight, and so as the molecular weight increases, molecular entanglement tends to increase. Further, the intrinsic viscosity of the polyethylene terephthalate resin is preferably 2.0 dL/g or less, more preferably 1.5 dL/g or less, further preferably 1.2 dL/g or less, still further preferably 0.95 dL/g or less, and still further preferably 0.85 dL/g or less. By setting the intrinsic viscosity to be equal to or less than the above upper limit, the load on the extruder and molding machine tends to be reduced without the melt viscosity during melt-kneading and molding becoming too high.

When the resin composition of the first embodiment contains two or more types of polyethylene terephthalate resins, the intrinsic viscosity is the intrinsic viscosity of the mixture.

The melt volume rate (MVR) of the polyethylene terephthalate resin measured in accordance with JIS K7210 (temperature 265°C, load 5 kgf) is 10 cm$^3$/10 minutes or more, and more preferably 20 cm$^3$/10 minutes or more, and is preferably 150 cm$^3$/10 minutes or less, and more preferably 100 cm$^3$/10 minutes or less.

In particular, in the resin composition of the first embodiment, when the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin, and has an intrinsic viscosity of is 0.60 dL/g or more (preferably more than 0.70 dL/g), it tends to be possible to effectively achieve high impact resistance, a low molded article shrinkage rate, and a high nominal tensile strength at break.

Examples of acid components other than the terephthalic acid and the isophthalic acid in the polyethylene terephthalate resin used in the first embodiment include dicarboxylic acids and derivatives thereof such as naphthalene dicarboxylic acid, 4,4'-diphenylsulfonedicarboxylic acid, 4,4'-biphenyldicarboxylic acid, 1,4-cyclohexanedicarboxylic acid, 1,3-phenylenedioxydiacetic acid, structural isomers of these, malonic acid, succinic acid, and adipic acid, and oxyacids and derivatives thereof such as p-hydroxybenzoic acid and glycolic acid.

In the polyethylene terephthalate resin used in the first embodiment, the terephthalic acid unit and the isophthalic acid unit preferably account for, of all the dicarboxylic acid units, 80 mol% or more, more preferably 95 mol% or more, further preferably 98 mol% or more, and still further preferably 99 mol% or more.

Examples of a diol component other than ethylene glycol in the polyethylene terephthalate resin used in the first embodiment include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S, and the like.

In the polyethylene terephthalate resin used in the first embodiment, the ethylene glycol preferably accounts for, of all the diol units, 80 mol% or more, more preferably 95 mol% or more, further preferably 98 mol% or more, and still further preferably 99 mol% or more.

The polyethylene terephthalate resin may be obtained by copolymerizing with, for example, 1.0 mol% or less, preferably 0.5 mol% or less, and more preferably 0.3 mol% or less, of a branching component, for example, an acid capable of forming a trifunctional ester, such as tricarballylic acid, trimellisic acid, or trimellitic acid, or a tetrafunctional ester, such as pyromellitic acid, or an alcohol capable of forming a trifunctional or tetrafunctional ester, such as glycerin, trimethylolpropane, or pentaerythritol.

In the polyethylene terephthalate resin used in the first embodiment, the terephthalic acid unit, the isophthalic acid unit, and the ethylene glycol unit preferably account for, of all the units excluding the terminals, 90 mol% or more, more preferably 95 mol% or more, further preferably 98 mol% or more, and still further preferably 99 mol% or more.

The terminal carboxyl group content of the polyethylene terephthalate resin may be appropriately selected and determined, but the terminal carboxyl group content usually 60 eq/ton or less, preferably 50 eq/ton or less, and more preferably 30 eq/ton or less.

The terminal carboxyl group content can be adjusted by any conventionally known method, such as a method of adjusting polymerization conditions such as raw material charge ratio, and polymerization temperature, and pressure reduction method during polymerization, and a method of reacting with a terminal blocking agent.

As the polyethylene terephthalate resin used in the first embodiment, it is preferred to use recycled PET, in particular recycled PET derived from PET bottles, because the nominal strain at break of a molded article obtained by molding the resin composition of the first embodiment increases.

This is inferred to be due to the fact that although polyethylene terephthalate resins usually contain linear oligomers and cyclic oligomers, and the main components are cyclic trimers, cyclic tetramers, and cyclic pentamers, in the case of recycled PET, during the recycling process, the amount of these cyclic oligomers decreases. Further, this is also inferred to be due to the fact that, in particular for recycled PET derived from bottles, as described above, the PET undergoes a crystallization step or a solid phase polymerization step during the recycling process, and so the amount of cyclic oligomers tends to further decrease.

The recycled PET derived from PET bottles preferably has a total amount of cyclic oligomers (cyclic trimers, cyclic tetramers, cyclic pentamers) of 1.1% by mass or less, more preferably 0.9% by mass or less, and particularly preferably 0.7% by mass or less. By setting this total amount to be equal to or less than the above upper limit, fogging resistance tends to be excellent, the amount of deposits on the mold surface tends to decrease, and the nominal tensile strain at break tends to be increased. Although the lower limit is not particularly limited, 0.1% by mass or more is realistic.

Further, the cyclic trimer content in the recycled PET is preferably 0.8% by mass or less, more preferably 0.6% by mass or less, and particularly preferably 0.5% by mass or less. By setting this total amount to be equal to or less than the above upper limit, fogging resistance tends to be excellent, the amount of deposits on the mold surface tends to decrease, and the nominal tensile strain at break tends to be increased. Although the lower limit is not particularly limited, 0.1% by mass or more is realistic.

The cyclic oligomer content is obtained by dissolving 0.1 g of the polyethylene terephthalate resin in a soluble solvent such as chloroform, dissolving and reprecipitating, filtering the supernatant liquid, and then measuring by high performance liquid chromatography (HPLC). Further, quantification was carried out by a by a single-point absolute calibration curve method, and the value was expressed in terms of DMT (dimethyl terephthalate).

Recycled PET such as recycled PET derived from PET bottles may contain metal elements as impurities. Examples of the metal elements include iron, calcium, sodium, titanium, and the like. It is inferred that metal elements such as iron, calcium, sodium, and titanium act as crystal nucleating agents in the resin composition of the first embodiment, and contribute to improving the mold release properties of the molded article obtained by molding the resin composition.

Such recycled PET contains, for example, preferably 0.2 $\mu$g/g or more of elemental iron, more preferably 0.6 g/g or more, further preferably 0.8 $\mu$g/g or more, and still further preferably 1.6 $\mu$g/g or more. By setting the content to be equal to or more than the above lower limit, the mold release properties during molding tend to be improved. A realistic upper limit is, for example, 20 $\mu$g/g or less.

Such recycled PET may contain, for example, 0.4 $\mu$g/g or more of elemental calcium, 0.8 $\mu$g/g or more, 1.5 $\mu$g/g or more, or even 2.0 $\mu$g/g or more. A realistic upper limit is, for example, 300 $\mu$g/g or less.

Such recycled PET may contain, for example, 0.4 $\mu$g/g or more of elemental sodium, 0.6 $\mu$g/g or more, 1.2 $\mu$g/g or more, or even 1.6 $\mu$g/g or more. A realistic upper limit is, for example, 20 $\mu$g/g or less.

Such recycled PET may contain, for example, 0.4 $\mu$g/g or more of elemental titanium, 0.6 $\mu$g/g or more, 1.2 $\mu$g/g or more, or even 1.6 $\mu$g/g or more. A realistic upper limit is, for example, 20 $\mu$g/g or less.

The qualitative/semi-quantitative analysis ($\mu$g/g) of the metal elements in the PET is performed by ICP emission spectrometry. In this case, as a pretreatment, 200 mg of a sample is weighed, the sample is subjected to Kjeldahl wet digestion (sulfuric acid/nitric acid, sulfuric acid/hydrogen peroxide), the volume is adjusted to 50 mL, and then ICP emission analysis is conducted by an acid concentration matching one-point calibration method. The ICP emission analysis can be carried out by axial/radial photometry using an "iCAP76000uo" manufactured by Thermo Fisher Scientific.

<Resin blend ratio>

In the resin composition of the first embodiment, the mass ratio of the polybutylene terephthalate resin and the above-described specific polyethylene terephthalate resin with respect to a total of 100 parts by mass of the polybutylene terephthalate resin and the polyethylene terephthalate resin is from 10/90 to 90/10. In the resin composition of the first embodiment, the proportion of the polyethylene terephthalate resin is, with respect to a total of 100 parts by mass of the polybutylene terephthalate resin and the polyethylene terephthalate resin, preferably 10 parts by mass or more, more preferably 15 parts by mass or more, further preferably 18 parts by mass or more, and may be 20 parts by mass or more, 22 parts by mass or more, 25 parts by mass or more, 30 parts by mass or more, 40 parts by mass or more, 50 parts by mass or more, 55 parts by mass or more, or 60 parts by mass or more. Further, in the resin composition of the first embodiment, the proportion of the polyethylene terephthalate resin is, with respect to a total of 100 parts by mass of the polybutylene terephthalate resin and the polyethylene terephthalate resin, preferably 70 parts by mass or less, more preferably 60 parts by mass or less, further preferably 50 parts by mass or less, and may be less than 50 parts by mass, 45 parts by mass or less, 40 parts by mass or less, 35 parts by mass or less, 32 parts by mass or less, 30 parts by mass or less, or 25 parts by mass or less.

The total amount of the polybutylene terephthalate resin and the polyethylene terephthalate resin in the resin composition of the first embodiment is, of the resin composition, preferably 50% by mass or more, more preferably 60% by mass or more, further preferably 70% by mass or more, still further preferably 80% by mass or more, and still further preferably 85% by mass or more. Setting the total amount to be equal to or more than the above lower limit is preferred because molding processability (mold release properties) is excellent, and the molded article obtained by molding the resin composition has better impact resistance and mechanical properties. In addition, the mold release properties of the molded article are better, so that the surface appearance tends to be further improved. Further, the total amount of polybutylene terephthalate resin and the polyethylene terephthalate resin in the resin composition of the first embodiment may be 100% by mass, but 99% by mass or less is practical. By setting the total amount to be equal to or less than the above upper limit, rigidity and heat resistance tends to be improved.

The resin composition of the first embodiment may contain only one type, or two or more types, of the polybutylene terephthalate resin and the polyethylene terephthalate resin, respectively. When two or more types are included, the total amount is preferably within the ranges described above.

<Other components>

The resin composition of the first embodiment may optionally include other components in addition to those described above, as long as the various desired physical properties are not significantly impaired. Examples of other components include other thermoplastic resins such as a styrene-based resin and various resin additives. In addition, the resin composition may contain one type of such other components, or contain two or more types in any combination and ratio.

Examples of resin additives include a mold release agent, a stabilizer (thermal stabilizer, light stabilizer), a colorant (pigment, dye), a reactive compound, a nucleating agent, a flame retardant, flame retardant aid, a filler, an antistatic agent, an antifogging agent, an antiblocking agent, a fluidity improver, a plasticizer, a dispersant, an antibacterial agent, and the like.

In the resin composition of the first embodiment, the total amount of the polybutylene terephthalate resin, the polyethylene terephthalate resin, the non-fibrous inorganic filler, and the optionally added components is 100% by mass.

<<Styrene-based resin>>

The resin composition of this embodiment may include a styrene-based resin.

Examples of the styrene-based resin include a homopolymer of a styrene-based monomer, a copolymer of a styrene-based monomer and a monomer copolymerizable with the styrene-based monomer, and the like. Examples of the styrene-based monomer include styrene, $\alpha$-methylstyrene, chlorostyrene, methylstyrene, and tert-butylstyrene. In the styrene-based resin in this embodiment, 50 mol% or more of the monomer units are a styrene-based monomer.

More specifically, examples of the styrene-based resin include resins such as polystyrene resin, an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), an acrylonitrile-ethylenepropylene rubber-styrene copolymer (AES resin), and a styrene-IPN type rubber copolymer.

In this embodiment, the styrene-based resin is preferably an acrylonitrile-styrene copolymer (AS resin), high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), or an acrylonitrile-ethylenepropylene rubber-styrene copolymer (AES resin), and more preferably is an acrylonitrile-styrene copolymer (AS resin).

The content of the styrene monomer in the acrylonitrile-styrene copolymer (AS resin) is preferably from 50 to 95% by mass, and more preferably from 65 to 92% by mass.

The weight average molecular weight of the styrene-based resin is usually 50,000 or more, preferably 100,000 or more, and more preferably 150,000 or more, and usually 500,000 or less, preferably is 400,000 or less, and more preferably 300,000 or less. Further, the number average molecular weight is usually 10,000 or more, preferably 30,000 or more, and more preferably 50,000 or more, and preferably 500,000 or less, and more preferably 300,000 or less.

The melt flow rate (MFR) of the styrene-based resin measured in accordance with JIS K7210 (temperature 200°C, load 5 kgf) is preferably from 0.1 to 30 g/10 minutes, and more preferably from 0.5 to 25 g/10 minutes. When the MFR is 0.1 g/10 minutes or more, fluidity tends to improve, and when the MFR is 30 g/10 minutes or less, impact resistance tends to improve.

Examples of a method for producing such a styrene-based resin include known methods, such as emulsion polymerization, solution polymerization, suspension polymerization, and bulk polymerization.

Details regarding the styrene-based resin may be found in the descriptions in paragraphs 0061 to 0069 of Japanese Patent Laid-Open No. 2017-052925 A and the descriptions in paragraphs 0021 to 0031 and paragraphs 0057 to 0064 of Japanese Patent Laid-Open No. 2017-052262 A, the contents of which are incorporated herein by reference.

When the resin composition of this embodiment includes a styrene-based resin, the content thereof is, with respect to a total of 100 parts by mass of the polybutylene terephthalate resin and the polyethylene terephthalate resin, preferably 0.1 parts by mass or more, more preferably 0.5 parts by mass or more, further preferably 1.0 parts by mass or more, still further preferably 2.0 parts by mass or more, and still further preferably 3.0 parts by mass or more. By setting the content to be equal to or more than the above lower limit, the effects of reducing the shrinkage rate and suppressing appearance defects tend to be further improved. Further, the upper limit of the content of the styrene-based resin is, with respect to the total of 100 parts by mass of the polybutylene terephthalate resin and the polyethylene terephthalate resin, preferably 20.0 parts by mass or less, more preferably 15.0 parts by mass or less, further preferably 10.0 parts by mass or less, still further preferably 8.0 parts by mass or less, and still further preferably 6.0 parts by mass or less. By setting the content to be equal to or less than the above upper limit, the effect of suppressing a decrease in weld strength and impact strength tends to be further improved.

The resin composition of this embodiment may contain only one type of the styrene-based resin, or may contain two or more types of the styrene-based resin. When the resin composition contains two or more types, the total amount is preferably within the ranges described above.

<Non-fibrous inorganic filler>

The resin composition of the first embodiment may contain a non-fibrous inorganic filler. By including the non-fibrous inorganic filler, rigidity and heat resistance are improved, and there is an effect of reducing anisotropy in shrinkage during molding.

Here, non-fibrous inorganic filler refers to fillers having a shape other than a fiber shape, and the non-fibrous inorganic filler is preferably a plate-like filler or a particulate filler.

Examples of the non-fibrous inorganic filler include calcium carbonate, talc, mica, silica, kaolin, wollastonite, barium sulfate, zirconium silicate, clay, bentonite, hydrotalcite, calcium sulfate, barium carbonate, magnesium carbonate, magnesium sulfate, calcium silicate, alumina, glass beads, glass flakes, titanium oxide, zinc oxide, magnesium oxide, calcium titanate, magnesium titanate, barium titanate, and the like, but calcium carbonate, talc, mica, silica, kaolin, barium sulfate, and zirconium silicate are preferred, and calcium carbonate or talc is more preferred. Calcium carbonate is particularly preferred because it tends to improve the appearance of the molded article.

Further, it is preferred that the surface of the non-fibrous inorganic filler used in the first embodiment has been treated with an acid, and more preferably the surface has been treated with a fatty acid.

Examples of the acid used in the acid treatment include a fatty acid, a rosin acid, and a lignic acid, and a saturated or an unsaturated fatty acid having from 6 to 20 carbon atoms is preferred. Examples of the saturated or the unsaturated fatty acid having from 6 to 20 carbon atoms include stearic acid, palmitic acid, lauric acid, oleic acid, linoleic acid, and the like.

The non-fibrous inorganic filler used in the first embodiment preferably has a volume-based average particle size of 5 $\mu$m or less, more preferably 3 $\mu$m or less, further preferably 1 $\mu$m or less, still further 0.8 $\mu$m or less, still further preferably 0.5 $\mu$m or less, and particularly preferably 0.3 $\mu$m or less. The lower limit of the volume-based average particle size is preferably 0.01 $\mu$m or more, and more preferably 0.08 $\mu$m or more. The volume-based average particle size in the first embodiment is calculated based on a specific surface area analyzed from a gas adsorption isotherm based on the assumption that the particle shape is a sphere.

Even when the non-fibrous inorganic filler is other than particulate, the average particle size in the first embodiment is based on the assumption that the particles have the same volume.

When a non-fibrous inorganic filler is included, the content of the non-fibrous inorganic filler is, with respect to a total of 100 parts by mass of the polybutylene terephthalate resin and the polyethylene terephthalate resin, preferably from 1 to 100 parts by mass, preferably 2.0 parts by mass or more, more preferably 3.0 parts by mass or more, further preferably 3.5 parts by mass or more, particularly preferably 4.0 parts by mass or more, and may be 4.5 parts by mass or more. By setting the content to be equal to or more than the above lower limit, there tends to be further improvement in the effects of improving rigidity and heat resistance, reducing shrinkage during molding, and reducing anisotropy. Further, the upper limit of the content of the non-fibrous inorganic filler is, with respect to a total of 100 parts by mass of the polybutylene terephthalate resin and the polyethylene terephthalate resin, preferably 50 parts by mass or less, more preferably 12.0 parts by mass or less, further preferably 10.0 parts by mass or less, still further preferably 8.0 parts by mass or less, still further preferably 7.0 parts by mass or less, still further preferably 6.0 parts by mass or less, and may be 5.0 parts by mass or less. By setting the content to be equal to or less than the above upper limit, the surface appearance of the molded article tends to be improved.

The content of the non-fibrous inorganic filler in the resin composition of the first embodiment includes is, of the resin composition, preferably 0.5% by mass or more, more preferably 1.0% by mass or more, further preferably 2.0% by mass or more, still further preferably 2.5% by mass or more, still further preferably 3.0% by mass or more, and particularly preferably 3.5% by mass or more. By setting the content to be equal to or more than the above lower limit, rigidity and heat resistance tend to be improved, and there tends to be reduced shrinkage and anisotropy during molding. Further, the content of the non-fibrous inorganic filler in the resin composition of the first embodiment is, of the resin composition, preferably 50% by mass or less, more preferably 40% by mass or less, further preferably 30% by mass or less, still further preferably 20% by mass or less, still further preferably 15% by mass or less, still further preferably 10% by mass or less, and particularly preferably 7% by mass or less. By setting the content to be equal to or less than the above upper limit, the surface appearance of the molded article tends to be improved.

The resin composition of the first embodiment may contain only one type of the non-fibrous inorganic filler, or may contain two or more types of the non-fibrous inorganic filler. When two or more types are included, the total amount is preferably within the ranges described above.

The resin composition of the first embodiment may or may not contain a fibrous filler such as glass fiber. In the first embodiment, it is preferred that the resin composition is substantially free of a fibrous filler. "Substantially free of fibrous filler" means that the content of fibrous filler contained in the resin composition is 10% by mass or less of the content of the non-fibrous inorganic filler, preferably 5% by mass or less, more preferably 3% by mass or less, and further preferably 1% by mass or less.

«Mold release agent»

The resin composition of the first embodiment may include a mold release agent. Examples of the mold release agent include a montanic acid ester wax, a polyolefin wax, a higher fatty acid, an ester compound, and the like, and a montanic acid ester wax and/or a polyolefin wax is preferred.

Specific details regarding the mold release agent may be found in the descriptions in paragraphs 0063 to 0077 of Japanese Patent Laid-Open No. 2018-070722 A and the descriptions in paragraphs 0090 to 0098 of Japanese Patent Laid-Open No. 2019-123809 A, the contents of which are incorporated herein by reference.

When the resin composition of the first embodiment includes a mold release agent, the content thereof is, with respect to a total of 100 parts by mass of the polybutylene terephthalate resin and the polyethylene terephthalate resin, preferably 0.01 parts by mass or more, and more preferably 0.08 parts by mass or more. By setting the content to be equal to or more than the above lower limit, mold release properties during molding tend to improve. Further, the upper limit of the content of the mold release agent is, with respect to a total of 100 parts by mass of the polybutylene terephthalate resin and the polyethylene terephthalate resin, preferably 5.0 parts by mass or less, and more preferably 1.0 parts by mass or less. By setting the content to be equal to or less than the above upper limit, it tends to be possible to reduce the amount of outgases.

The resin composition of the first embodiment may contain only one type of the mold release agent, or may contain two or more types of the mold release agent. When the resin composition contains two or more types, the total amount is preferably within the ranges described above.

«Stabilizer»

The resin composition of the first embodiment may include a stabilizer (light stabilizer and/or heat stabilizer).

Examples of the stabilizer include a hindered phenol compound, a hindered amine compound, a phosphorus compound, a sulfur stabilizer, and the like. Among these, a hindered phenol compound and/or a phosphorus compound is preferred.

Specific details regarding the stabilizer may be found in the description in paragraphs 0067 to 0075 of Japanese Patent Laid-Open No. 2021-063196 A, the descriptions in paragraphs 0046 to 0057 of Japanese Patent Laid-Open No. 2018-070722 A, the descriptions in paragraphs 0030 to 0037 of Japanese Patent Laid-Open No. 2019-056035 A, and the descriptions in paragraphs 0066 to 0078 of International Publication No. WO 2017/038949, the contents of which are incorporated herein by reference.

When the resin composition of the first embodiment includes a stabilizer, the content thereof is, with respect to a total of 100 parts by mass of the polybutylene terephthalate resin and the polyethylene terephthalate resin, preferably 0.01 parts by mass or more, and more preferably 0.05 parts by mass or more. By setting the content to be equal to or more than the above lower limit, there tends to be an improvement in the effect of suppressing thermal deterioration and oxidative deterioration of the resin during melt-kneading, molding, and use as a molded article. Further, the upper limit of the content of the stabilizer is, with respect to a total of 100 parts by mass of the polybutylene terephthalate resin and the polyethylene terephthalate resin, preferably 2.0 parts by mass or less, and more preferably 1.5 parts by mass or less. By setting the content to be equal to or less than the above upper limit, it is possible to effectively suppress adverse effects on appearance and physical properties caused by the aggregation of additives such as the stabilizer.

The resin composition of the first embodiment may contain only one type of the stabilizer, or may contain two or more types of the stabilizer. When the resin composition contains two or more types, the total amount is preferably within the ranges described above.

«Colorant»

The resin composition of the first embodiment may include a colorant (dye and/or pigment) . The colorant may be a dye or a pigment, but a pigment is preferred.

The colorant may be either an organic colorant or an inorganic colorant. Further, the colorant may be either a chromatic colorant or an achromatic colorant.

Examples of the colorant include the descriptions in paragraphs 0121 to 0123 of Japanese Patent Laid-Open No. 2021-101020 A and the descriptions in paragraphs 0088 to 0090 of Japanese Patent Laid-Open No. 2019-188393 A, the contents of which are incorporated herein by reference.

The resin composition of the first embodiment preferably contains carbon black. There are no restrictions on the type, raw material, or production method of the carbon black, and any of furnace black, channel black, acetylene black, Ketjen black, and the like can be used. There is no particular restriction on the number average particle size, but about 5 to 60 nm is preferred.

The carbon black preferably has a DBP oil absorption amount (unit: $cm^3/100$ g) of from 40 to 300 $cm^3/100$ g. The upper limit is preferably 300 $cm^3/100$ g or less, more preferably 200 $cm^3/100$ g or less, further preferably 150 $cm^3/100$ g or less, and may be 100 $cm^3/100$ g or less. Further, the lower limit is preferably 40 $cm^3/100$ g or more, more preferably 50 $cm^3/100$ g or more, and further preferably 60 $cm^3/100$ g or more. By setting the DBP oil absorption amount to within the above upper and lower limits, the appearance of the molded article tends to be improved. The DBP oil absorption amount (unit: $cm^3/100$ g) can be measured in accordance with JIS K6217.

The carbon black preferably has a number average particle size (unit: nm) of from 5 to 60 nm. The upper limit is preferably 60 nm or less, more preferably 40 nm or less, further preferably 30 nm or less, and still further preferably 25 nm or less. The lower limit is preferably 10 nm or more, more preferably 13 nm or more, further preferably 16 nm or more, and still further preferably 19 nm or more. By setting the number average particle size to be within the above upper and lower limits, the appearance of the molded article tends to be improved. The number average particle size can be determined by acquiring an enlarged aggregate image according to the procedure described in the ASTM D3849 standard (Standard test method for carbon black - Morphological characterization by electron microscopy), measuring the particle size of 3,000 particles from this aggregate image as unit constituent particles, and taking the arithmetic average thereof.

By blending the carbon black as a masterbatch in advance with a thermoplastic resin, preferably a polyester resin such as a polybutylene terephthalate resin or a polystyrene-based resin, the degree of dispersion of the carbon black tends to increase and the appearance of the molded article tends to be improved. Further, it is preferred to use a polystyrene-based resin because jet blackness tends to be improved.

When the resin composition of the first embodiment includes a colorant (preferably carbon black), the content thereof is, with respect to a total of 100 parts by mass of the polybutylene terephthalate resin and the polyethylene terephthalate resin, preferably 0.01 parts by mass or more, more preferably 0.05 parts by mass or more, further preferably 0.1 parts by mass or more, and still further preferably 0.5 parts by mass or more. Further, the upper limit of the content of the colorant is, with respect to a total of 100 parts by mass of the polybutylene terephthalate resin and the polyethylene terephthalate resin, preferably 15 parts by mass or less, more preferably 10 parts by mass or less, further preferably 8 parts by mass or less, still further preferably 5 parts by mass or less, still further preferably 4 parts by mass or less, and depending on the use, may be 3 parts by mass or less, 2 parts by mass or less, or 1 part by mass or less. By setting the content to be equal to or less than the above upper limit, the mechanical strength of the molded article obtained tends to be further improved.

The resin composition of the first embodiment may contain only one type of colorant, or may contain two or more types of colorant. When the resin composition contains two or more types, the total amount is preferably within the ranges described above.

<<Reactive compound>>

The resin composition of this embodiment may include a reactive compound. The reactive compound is preferably one or more types selected from the group consisting of a carbodiimide compound, an epoxy compound, a compound having an oxazoline group (ring), a compound having an oxazine group (ring), a compound having a carboxylic acid, and a compound having an amide group. An epoxy compound is particularly preferred because hydrolysis resistance tends to be improved and outgassing tends to be suppressed.

The epoxy compound may be a monofunctional epoxy compound or a polyfunctional epoxy compound, but a polyfunctional epoxy compound is preferred. Examples of the polyfunctional epoxy compound include a bisphenol A type epoxy compound, a bisphenol F type epoxy compound, a resorcin type epoxy compound, a novolak type epoxy compound, an alicyclic compound type diepoxy compound, a glycidyl ether, and epoxidized polybutadiene. More specifically, any alicyclic compound type epoxy compound, such as a bisphenol A type epoxy compound, a bisphenol F type epoxy compound, a resorcin type epoxy compound, a novolak type epoxy compound, vinylcyclohexene dioxide, and dicyclopentadiene oxide, can be preferably used.

Further, the epoxy compound may be a copolymer having a glycidyl group-containing compound as a constituent component. Examples thereof may include a copolymer of a glycidyl ester of an $\alpha,\beta$-unsaturated acid with one or more monomers selected from the group consisting of an $\alpha$-olefin, an acrylic acid, an acrylic ester, a methacrylic acid, a methacrylic ester, and styrene.

In addition, the epoxy compound is preferably a copolymer of an epoxy group-containing monomer and a styrene-based monomer, and may be a copolymer with another copolymerizable monomer. Examples of the styrene-based monomer constituting the copolymer of an epoxy group-containing monomer and a styrene-based monomer include glycidyl (meth)acrylate, glycidyl itaconate, and the like, Glycidyl methacrylate and glycidyl acrylate are preferred, and glycidyl methacrylate is particularly preferred. Examples of the styrene-based monomer include styrene, $\alpha$-methyl-styrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, tribromostyrene, and the like. Styrene and $\alpha$-methylstyrene are more preferred, and styrene is particularly preferred. Specific examples of the copolymer of an epoxy group-containing monomer and a styrene-based monomer include a glycidyl (meth)acrylate-styrene copolymer, a glycidyl (meth)acrylatestyrene-methyl (meth)acrylate, and the like, which are particularly preferred because outgassing tends to be suppressed.

Other than the above, details regarding the reactive compound may be found in the descriptions in paragraphs 0038 to 0050 of Japanese Patent Laid-Open No. 2020-199755 A and paragraph 0043 of Japanese Patent Laid-Open No. 2020-125468 A, the contents of which are incorporated herein by reference.

When the resin composition of the first embodiment includes a reactive compound, the content thereof is, with respect to a total of 100 parts by mass of the polybutylene terephthalate resin and the polyethylene terephthalate resin, preferably 0.01 parts by mass or more, and more preferably 0.05 parts by mass or more. It is preferred to set the content to be equal to or more than the above lower limit because hydrolysis resistance tends to be improved and outgassing tends to be suppressed. Further, the upper limit of the content of the reactive compound is, with respect to a total of 100 parts by mass of the polybutylene terephthalate resin and the polyethylene terephthalate resin, preferably 15 parts by mass or less, more preferably 10 parts by mass or less, further preferably 7 parts by mass or less, still further preferably 2.0 parts by mass or less, and particularly preferably 1.0 parts by mass or less. It is preferred to set the content to be equal to or less than the above upper limit because moldability tends to be improved.

The resin composition of the first embodiment may contain only one type of the reactive compound, or may contain two or more types of the reactive compound. When the resin composition contains two or more types, the total amount is preferably within the ranges described above.

2. Resin composition of second embodiment

The resin composition of the second embodiment is characterized in that, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a second cycle ($\Delta H_{Tc1}$-2nd) of the operation of less than 3 J/g.

With such a configuration, a molded article having excellent mold release properties can be obtained. The reason why a molded article having excellent mold release properties can be obtained is inferred to be that during molding the resin tends to crystallize or solidify more easily.

<Polybutylene terephthalate resin>

The polybutylene terephthalate resin used in the resin composition of the second embodiment is the same as the polybutylene terephthalate resin used in the resin composition of the first embodiment, and the preferred ranges, including the content, are also the same.

<Polyethylene terephthalate resin>

When one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min, the polyethylene terephthalate resin used in the second embodiment has an absolute value of the heat of crystallization during the heating phase in a second cycle ("$\Delta H_{Tc1}$-2nd") of the operation of less than 3 J/g. That is, it is preferred that a clear crystallization temperature (Tc1-2nd) during the heating phase is not exhibited. Having such a configuration tends to facilitate crystallization, improve mold release properties, and improve moldability.

As such polyethylene terephthalate resin, a virgin product (virgin PET), a recycled product (recycled PET), a bio-derived product (bio-PET), and mixtures thereof can be used. The details of the virgin PET, the recycled PET, and the bio-PET are the same as the matters described in the first embodiment, and the preferred ranges are also the same.

When one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min, the polyethylene terephthalate resin used in the second embodiment preferably has an absolute value of a heat of crystallization during a heating phase in a first cycle (hereinafter, sometimes referred to as "$\Delta H_{Tc1}$-1st") of the operation of less than 3 J/g. That is, it is preferred that a clear crystallization temperature (Tc1-1st) during the heating phase is not exhibited. By using such a resin, moldability tends to be improved. The reason for this is inferred to be that crystallization or solidification is more likely to occur during molding.

In addition, the polyethylene terephthalate resin used in the second embodiment preferably has an absolute value of the heat of crystallization during a cooling phase in the first cycle (hereinafter sometimes referred to as "$\Delta H_{Tc2}$-1st") of 3 J/g or more. That is, it is preferred to have a clear crystallization temperature during the cooling phase (Tc2-1st). Using such a resin tends to facilitate crystallization, improve mold release properties, and improve moldability. The preferred ranges of the Tc2-1st are the same as the matters and values described in the first embodiment, and the preferred ranges are also the same.

As such a polyethylene terephthalate resin, recycled PET, in particular recycled PET derived from PET bottles, is preferred.

Further, the preferred ranges of the melting point in the first cycle (Tm-1st) of the polyethylene terephthalate resin used in the second embodiment are the same as the matters and values described in the first embodiment, and the preferred ranges are also the same.

In addition, the polyethylene terephthalate resin used in the second embodiment preferably has an absolute value of the heat of crystallization during a cooling phase in the second cycle (hereinafter sometimes referred to as "$\Delta H_{Tc2}$-2nd") of 3 J/g or more. That is, it is preferred to have a clear crystallization temperature during the cooling phase (Tc2-2nd). The preferred ranges of the Tc2-2nd are the same as the matters and values described in the first embodiment, and the preferred ranges are also the same.

As such a polyethylene terephthalate resin, recycled PET, in particular recycled PET derived from PET bottles, is preferred.

Further, the preferred ranges of the melting point in the second cycle (Tm-2nd) of the polyethylene terephthalate resin used in the second embodiment are the same as the matters and values described in the first embodiment, and the preferred ranges are also the same.

The polyethylene terephthalate resin used in the second embodiment preferably has an absolute value of the heat of crystallization ($\Delta H_{Tc1}$-1st) during the heating phase in the first cycle of less than 3 J/g and an absolute value of the heat of crystallization ($\Delta H_{Tc2}$-1st) during the cooling phase in the first cycle of 3 J/g or more. That is, it is preferred that a clear crystallization temperature during the heating phase (Tc1-1st) is not exhibited and that there is a clear crystallization temperature during the cooling phase (Tc2-1st). By using such a polyethylene terephthalate resin, the effects of improved mold release properties and improved surface appearance can be exhibited better.

In addition, the polyethylene terephthalate resin used in the second embodiment preferably has an absolute value of the heat of crystallization ($\Delta H_{Tc1}$-2nd) during the heating phase in the second cycle of less than 3 J/g and an absolute value of the heat of crystallization ($\Delta H_{Tc2}$-2nd) during the cooling phase in the second cycle of 3 J/g or more. That is, it is preferred that a clear crystallization temperature during the heating phase (Tc1-2nd) is not exhibited in the second cycle, and that there is a clear crystallization temperature during the cooling phase (Tc2-2nd) in the second cycle. By using such a polyethylene terephthalate resin, the effects of improved mold release properties and improved surface appearance can be exhibited better.

As such a polyethylene terephthalate resin, recycled PET, in particular recycled PET derived from PET bottles, is preferred.

The polyethylene terephthalate resin used in the second embodiment preferably contains, based on all units derived from the dicarboxylic acid component, 0.5 mol% or more and 15 mol% or less of a unit derived from an isophthalic acid (hereinafter, sometimes referred to as "isophthalic acid unit"). The matters and values regarding the unit derived from an isophthalic acid are the same as the matters and values described in the first embodiment, and the preferred ranges are also the same.

The intrinsic viscosity of the polyethylene terephthalate resin is preferably 0.50 dL/g or more, more preferably 0.60 dL/g or more, further preferably 0.63 dL/g or more, still further preferably more than 0.70 dL/g, still further preferably 0.73 dL/g or more, still further preferably more than 0.76 dL/g, particularly preferably 0.78 dL/g or more, and particularly further preferably 0.80 dL/g or more. By setting the intrinsic viscosity to be equal to or more than the above lower limit, bending strength tends to be improved, the impact resistance of the obtained molded article tends to be further improved, and the shrinkage rate tends to be smaller. The reason for this is inferred to be due to the fact that as the molecular weight increases, molecular entanglement tends to increase. Further, the intrinsic viscosity of the polyethylene terephthalate resin is preferably 2.0 dL/g or less, more preferably 1.5 dL/g or less, further preferably 1.2 dL/g or less, still further preferably 0.95 dL/g or less, and still further preferably 0.85 dL/g or less. By setting the intrinsic viscosity to be equal to or less than the above upper limit, the load on the extruder and molding machine tends to be reduced without the melt viscosity during melt-kneading and molding becoming too high.

When the resin composition of the second embodiment contains two or more types of polyethylene terephthalate resins, the intrinsic viscosity is the intrinsic viscosity of the mixture.

In particular, in the resin composition of the second embodiment, when the polyethylene terephthalate resin contains 0.5 mol% or more and 15 mol% or less of an isophthalic acid unit with respect to all units derived from the dicarboxylic acid component, and has an intrinsic viscosity of is 0.60 dL/g or more (preferably more than 0.70 dL/g), it tends to be possible to effectively achieve high impact resistance and low molded article shrinkage rate.

The polyethylene terephthalate resin used in the second embodiment is, except for the points described above, the same as the polyethylene terephthalate resin used in the first embodiment.

The melt volume rate (MVR) of the polyethylene terephthalate resin measured in accordance with JIS K7210 (temperature 265°C, load 5 kgf) is 10 cm$^3$/10 minutes or more, and more preferably 20 cm$^3$/10 minutes or more, and is preferably 150 cm$^3$/10 minutes or less, and more preferably 100 cm$^3$/10 minutes or less.

<Resin blend ratio>

In the resin composition of the second embodiment, the mass ratio of the polybutylene terephthalate resin and the polyethylene terephthalate resin with respect to a total of 100 parts by mass of the polybutylene terephthalate resin and the polyethylene terephthalate resin is from 10/90 to 90/10. In the resin composition of the second embodiment, the proportion of the polyethylene terephthalate resin is, with respect to a total of 100 parts by mass of the polybutylene terephthalate resin and the polyethylene terephthalate resin, preferably 15 parts by mass or more, more preferably 20 parts by mass or more, further preferably 40 parts by mass or more, still further preferably 50 parts by mass or more, still further preferably 55 parts by mass or more, and may be 65 parts by mass or more. Further, in the resin composition of the second embodiment, the proportion of the polybutylene terephthalate resin is, with respect to a total of 100 parts by mass of the polybutylene terephthalate resin and the polyethylene terephthalate resin, preferably 85 parts by mass or less, further preferably 80 parts by mass or less, and still further preferably 75 parts by mass or less.

The total amount of the polybutylene terephthalate resin and the polyethylene terephthalate resin in the resin composition of the second embodiment is, of the resin composition, preferably 40% by mass or more, more preferably 45% by mass or more, further preferably 50% by mass or more, and still further preferably 55% by mass or more. Setting the total amount to be equal to or more than the above lower limit is preferred because molding processability (mold release properties) is excellent, and the molded article obtained by molding the resin composition has better impact resistance and mechanical properties. In addition, the mold release properties of the molded article are better, so that the surface appearance tends to be further improved. Further, the total amount of the polybutylene terephthalate resin and the polyethylene terephthalate resin in the resin composition of the second embodiment is preferably 99% by mass or less, more preferably 90% by mass or less, further preferably 85% by mass or less, still further preferably 80% by mass or less, still further preferably 75% by mass or less, still further preferably 70% by mass or less, and particularly further preferably 65% by mass or less. By setting the total amount to be equal to or less than the above upper limit, heat resistance tends to be improved.

The resin composition of the second embodiment may contain only one type, or two or more types, of the polybutylene terephthalate resin and the polyethylene terephthalate resin, respectively. When two or more types are included, the total amount is preferably within the ranges described above.

<Fibrous inorganic filler>

The resin composition of the second embodiment preferably further contains from 1 to 150 parts by mass of a fibrous inorganic filler with respect to 100 parts by mass of the polybutylene terephthalate resin and the polyethylene terephthalate resin. By including the fibrous inorganic filler, the mechanical strength of the obtained molded article tends to be improved, and the molding shrinkage rate can also be effectively reduced.

The fibrous inorganic filler may be short fibers or long fibers.

Examples of the raw material of the fibrous inorganic filler include inorganic materials such as glass, carbon (carbon fiber, etc.), alumina, boron, ceramic, metal (steel, etc.), as well as organic substances such as plants (including Kenaf, bamboo, etc.), aramid, polyoxymethylene, aromatic polyamide, polyparaphenylene benzobisoxazole, and ultra-high molecular weight polyethylene, and glass is preferred.

The resin composition of the second embodiment preferably contains glass fiber as the fibrous inorganic filler.

The glass fiber is selected from glass compositions such as A-glass, C-glass, E-glass, R-glass, D-glass, M-glass, and S-glass, and E-glass (alkali-free glass) is particularly preferred.

Glass fiber refers to a fibrous material that has a perfect circular or polygonal cross-sectional shape when cut at right angles to the length direction. The glass fiber has a single fiber number average fiber diameter of usually from 1 to 25 μm, and preferably 5 to 17 μm. By setting the number average fiber diameter to be equal to or more than 1 μm, the moldability of the resin composition tends to be further improved. By setting the number average fiber diameter to be equal to or less than 25 μm, the appearance of the obtained structure tends to improve and a reinforcement effect also tends to improve. The glass fiber may be a single fiber or a plurality of twisted single fibers.

The form of the glass fiber may be any of glass roving, which is made by continuously winding a single fiber or a plurality of twisted-together strands, chopped strands cut to a length of from 1 to 10 mm (i.e., glass fiber having a number average fiber length of from 1 to 10 mm), and milled fiber that has been crushed to a length of about 10 to 500 μm (i.e., glass fiber having a number average fiber length of from 10 to 500 μm), but chopped strands having a length of from 1 to 10 mm are preferred. Glass fibers having different shapes can also be used together.

A glass fiber having an irregular cross-sectional shape is also preferred. This irregular cross-sectional shape means that the oblateness, which is represented by the major axis/minor axis ratio of a cross section perpendicular to the length direction of the fiber, is, for example, from 1.5 to 10, and of that, preferably from 2.5 to 10, further preferably from 2.5 to 8, and particularly from 2.5 to 5.

To improve affinity with the resin component, the glass fiber may be surface-treated with, for example, a silane compound, an epoxy compound, a urethane compound, and the like, or have been oxidized, as long as the properties of the resin composition of the second embodiment are not significantly impaired.

The content of the fibrous inorganic filler in the resin composition of the second embodiment is, with respect to a total of 100 parts by mass of the polybutylene terephthalate resin and the polyethylene terephthalate resin, preferably 1 part by mass or more, more preferably 5 parts by mass or more, further preferably 8 parts by mass or more, still further preferably 15 parts by mass or more, still further preferably 25 parts by mass or more, still further preferably 35 parts by mass or more, and may be 45 parts by mass or more. By setting the content to be equal to or more than the above lower limit, the mechanical strength of the molded article obtained tends to be further improved. Further, the upper limit of the content of the fibrous inorganic filler is, with respect to a total of 100 parts by mass of the polybutylene terephthalate resin and the polyethylene terephthalate resin, preferably 150 parts by mass or less, more preferably 120 parts by mass or less, further preferably 100 parts by mass or less, still further preferably 80 parts by mass or less, and still further preferably 60 parts by mass or less, and may be 50 parts by mass or less. By setting the content to be equal to or less than the above upper limit, moldability tends to be even better.

The content of the fibrous inorganic filler in the resin composition of the second embodiment is, of the resin composition, preferably 1% by mass or more, more preferably 10% by mass or more, further preferably 15% by mass or more, still further preferably 20% by mass or more, and still further preferably 25% by mass or more. By setting the content to be equal to or more than the above lower limit, the mechanical strength of the obtained molded article tends to be further improved, and the shrinkage rate of the molded article tends to be smaller. Further, the content of the fibrous inorganic filler in the resin composition of the second embodiment is, of the resin composition, preferably 60% by mass or less, more preferably 55% by mass or less, further preferably 45% by mass or less, and may be 40% by mass or less or 35% by mass or less. By setting the content to be equal to or less than the above upper limit, moldability tends to be even better.

The resin composition of the second embodiment may contain only one type of the fibrous inorganic filler, or may contain two or more types of the fibrous inorganic filler. When the resin composition contains two or more types, the total amount is preferably within the ranges described above.

<Reactive compound>

The resin composition of the second embodiment may include a reactive compound. The reactive compound is preferably one or more types selected from the group consisting of a carbodiimide compound, an epoxy compound, a compound having an oxazoline group (ring), a compound having an oxazine group (ring), a compound having a carboxylic acid, and a compound having an amide group. An epoxy compound is particularly preferred because impact resistance, hydrolysis resistance, and high-speed bending strength tend to be improved and mold release properties during molding tend to be improved.

Examples of a first embodiment of the epoxy compound include a non-elastomer such as a glycidyl compound, an epoxy compound having an aromatic ring, and an alicyclic epoxy compound, and it is preferred to include at least an epoxy compound having an aromatic ring.

The first embodiment of the epoxy compound may be a monofunctional epoxy compound or a polyfunctional epoxy compound, but a polyfunctional epoxy compound is preferred. Examples of the polyfunctional epoxy compound include a bisphenol A type epoxy compound, a bisphenol F type epoxy compound, a resorcin type epoxy compound, a novolak type epoxy compound, an alicyclic compound type diepoxy compound, a glycidyl ether, and epoxidized polybutadiene. More specifically, any alicyclic compound type epoxy compound, such as a bisphenol A type epoxy compound, a bisphenol F type epoxy compound, a resorcin type epoxy compound, a novolak type epoxy compound, vinylcyclohexene dioxide, and dicyclopentadiene oxide, can be preferably used.

Among these, a bisphenol A type epoxy compound, a novolak type epoxy compound, a bisphenol F type epoxy compound, a biphenyl type epoxy compound, and the like are preferred, in particular a bisphenol A type epoxy compound and an orthocresol/novolak type epoxy resin (polyglycidyl ether compound of an O-cresol/formaldehyde polycondensate) are more preferred, and a bisphenol A-type epoxy compound is particularly preferred because impact resistance and high-speed bending strength tend to be improved and mold release properties during molding tend to be improved. Commercially available products include "EP-17" (trade name, manufactured by ADEKA), Epicote 1003 (trade name, manufactured by Mitsubishi Chemical Corporation), and YDCN704 (trade name, manufactured by Nippon Steel & Sumikin Chemical Co., Ltd.

Further, the epoxy compound may be a copolymer having a glycidyl group-containing compound as a constituent component. Examples thereof may include a copolymer of a glycidyl ester of an $\alpha,\beta$-unsaturated acid with one or more monomers selected from the group consisting of an $\alpha$-olefin, an acrylic acid, an acrylic ester, a methacrylic acid, a methacrylic ester, and styrene.

A second embodiment of the epoxy compound includes an elastomer containing a glycidyl group. By including an elastomer containing a glycidyl group, a molded article having a higher impact resistance tends to be obtained.

Examples of the elastomer containing a glycidyl group include a copolymer obtained by copolymerizing an $\alpha$-olefin, a glycidyl ester of an $\alpha,\beta$-unsaturated acid, and optionally an unsaturated monomer that is copolymerizable with these. The amount of the $\alpha$-olefin and the glycidyl ester of an $\alpha,\beta$-unsaturated acid is preferably 60% by mass or more of all the copolymerization components.

Examples of the $\alpha$-olefin include ethylene, propylene, butene-1, pentene-1, and the like. Two or more types of these may be used. Examples of the glycidyl ester of an $\alpha,\beta$-unsaturated acid include glycidyl acrylate, glycidyl methacrylate, glycidyl ethacrylate, glycidyl itaconate, and the like. Two or more types of these may be used. Examples of vinyl monomers that are copolymerizable with the above components include a vinyl ether, vinyl esters such as vinyl acetate and vinyl propionate, acrylates and methacrylates such as methyl, ethyl, propyl, butyl; acrylonitrile, styrene, and the like. Two or more types of these may be used.

Preferred examples of the elastomer containing a glycidyl group include an ethylene/glycidyl methacrylate copolymer, an ethylene/glycidyl methacrylate/vinyl acetate copolymer, an ethylene/glycidyl methacrylate/alkyl acrylate copolymer, an ethylene/alkyl acrylate/vinyl acetate copolymer, and the like. In particular, from the viewpoint of excellent toughness and further improving the heat-moisture resistance and impact resistance of the molded article, an ethylene/glycidyl methacrylate/alkyl acrylate (preferably butyl acrylate) copolymer is preferred. Specific examples of the elastomer containing a glycidyl group can be obtained under the trade name of "Lotader" (registered trademark) AX8900 and AX8700 manufactured by Arkema.

Other than the above, details regarding the reactive compound may be found in the descriptions in paragraphs 0038 to 0050 of Japanese Patent Laid-Open No. 2020-199755 A and paragraph 0043 of Japanese Patent Laid-Open No. 2020-125468 A, the contents of which are incorporated herein by reference.

Further, the content of the reactive compound is the same as the matters and values as described in the first embodiment, and the preferred ranges are also the same.

<Other components>

The resin composition of the second embodiment may optionally include other components in addition to those described above, as long as the various desired physical properties are not significantly impaired. Examples of other components include other thermoplastic resins such as a styrene-based resin and various resin additives. In addition, the resin composition may contain one type of such other components, or contain two or more types in any combination and ratio.

Specific examples of resin additives include a mold release agent, a stabilizer (thermal stabilizer, light stabilizer), a colorant (pigment, dye), a nucleating agent, a flame retardant, flame retardant aid, a filler, an antistatic agent, an antifogging agent, an antiblocking agent, a fluidity improver, a plasticizer, a dispersant, an antibacterial agent, and the like.

The details of these other components are the same as the matters and values described in the first embodiment, and the preferred ranges are also the same.

Further, the resin composition of the second embodiment may also contain the non-fibrous inorganic filler described in the section of the first embodiment. The content of the non-fibrous filler is also the same as the matters and values described in the first embodiment, and the preferred ranges are also the same.

In the resin composition of the second embodiment, the total amount of the polybutylene terephthalate resin, the polyethylene terephthalate resin, and optionally-added components is 100% by mass.

3. Resin composition of third embodiment

The resin composition of the third embodiment is characterized by, in the resin composition of the first embodiment and/or the second embodiment, including from 1 to 150 parts by mass of a fibrous inorganic filler with respect to a total of 100 parts by mass of the polybutylene terephthalate resin and the polyethylene terephthalate resin, wherein the polyethylene terephthalate resin has an intrinsic viscosity of 0.60 dL/g or more (preferably more than 0.70 dL/g), the polyethylene terephthalate resin contains a unit derived from an isophthalic acid, and the unit derived from the isophthalic acid is 0.5 mol% or more and 15.0 mol% or less of all units derived from a dicarboxylic acid component contained in the polyethylene terephthalate resin. In particular, in the resin composition of the first embodiment, it is preferred that the above-described mode is satisfied.

With such a configuration, a molded article that is an injection moldable resin composition and that has a low molding shrinkage rate and shrinkage anisotropy can be obtained. The reason that a molded article having a low molding shrinkage and shrinkage anisotropy can be obtained is inferred to be because with this configuration crystallization during molding is suppressed more than to a polybutylene terephthalate resin alone, which generally tends to crystallize and has a high shrinkage rate.

<Polybutylene terephthalate resin>

The polybutylene terephthalate resin used in the resin composition of the third embodiment is the same as the polybutylene terephthalate resin used in the resin composition of the first embodiment, and the preferred ranges, including the content, are also the same.

<Polyethylene terephthalate resin>

The intrinsic viscosity of the polyethylene terephthalate resin used in the third embodiment is preferably 0.50 dL/g or more, more preferably 0.60 dL/g or more, further preferably 0.63 dL/g or more, still further preferably more than 0.70 dL/g, still further preferably 0.73 dL/g or more, still further preferably more than 0.76 dL/g, particularly preferably 0.78 dL/g or more, and particularly further preferably 0.80 dL/g or more. By setting the intrinsic viscosity to be equal to or more than the above lower limit, the impact resistance of the obtained molded article tends to be further improved and the shrinkage rate tends to be smaller. The reason for this is inferred to be due to the fact that as the molecular weight increases, molecular entanglement tends to increase. Further, the intrinsic viscosity of the polyethylene terephthalate resin is preferably 2.0 dL/g or less, more preferably 1.5 dL/g or less, further preferably 1.2 dL/g or less, still further preferably 0.95 dL/g or less, and still further preferably 0.85 dL/g or less. By setting the intrinsic viscosity to be equal to or less than the above upper limit, the load on the extruder and molding machine tends to be reduced without the melt viscosity during melt-kneading and molding becoming too high.

When the resin composition of the third embodiment contains two or more types of polyethylene terephthalate resins, the relative viscosity is the intrinsic viscosity of the mixture.

The melt volume rate (MVR) of the polyethylene terephthalate resin measured in accordance with JIS K7210 (temperature 265°C, load 5 kgf) is 10 $cm^3$/10 minutes or more, and more preferably 20 $cm^3$/10 minutes or more, and is preferably 150 $cm^3$/10 minutes or less, and more preferably 100 $cm^3$/10 minutes or less.

The proportion of the isophthalic acid unit is, of all units derived from the dicarboxylic acid component, preferably 0.7 mol% or more, more preferably 0.9 mol% or more, further preferably 1.1 mol% or more, still further preferably 1.3 mol% or more, and still further preferably 1.5 mol% or more. In addition, the proportion of the isophthalic acid unit is, of all units derived from the dicarboxylic acid component, 10.0 mol% or less, 8.0 mol% or less, 5.0 mol% or less, 4 mol% or less, preferably 3.5 mol% or less, more preferably 3.0 mol% or less, further preferably 2.5 mol% or less, still further preferably 2.3 mol% or less, and still further preferably 2.0 mol% or less.

As such polyethylene terephthalate resin, a virgin product (virgin PET), a recycled product (recycled PET), a bio-derived product (bio-PET), and mixtures thereof can be used. The details of the virgin PET, the recycled PET, and the bio-PET are the same as the matters described in the first embodiment, and the preferred ranges are also the same. The details of the virgin PET, the recycled PET, and the bio-PET are the same as the matters described in the first embodiment, and the preferred ranges are also the same.

Examples of acid components other than the terephthalic acid and the isophthalic acid in the polyethylene terephthalate resin used in the third embodiment include dicarboxylic acids and derivatives thereof such as naphthalene dicarboxylic acid, 4,4'-diphenylsulfonedicarboxylic acid, 4,4'-biphenyldicarboxylic acid, 1,4-cyclohexanedicarboxylic acid, 1,3-phenylenedioxydiacetic acid, structural isomers of these, malonic acid, succinic acid, and adipic acid, and oxyacids and derivatives thereof such as such as p-hydroxybenzoic acid and glycolic acid.

In the polyethylene terephthalate resin used in the third embodiment, the terephthalic acid unit and the isophthalic acid unit preferably account for, of all the dicarboxylic acid units, 80 mol% or more, more preferably 95 mol% or more, further preferably 98 mol% or more, and still further preferably 99 mol% or more.

Examples of a diol component other than ethylene glycol in the polyethylene terephthalate resin used in the third embodiment include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S, and the like.

In the polyethylene terephthalate resin used in the third embodiment, the ethylene glycol preferably accounts for, of all the diol units, 80 mol% or more, more preferably 95 mol% or more, further preferably 98 mol% or more, and still further preferably 99 mol% or more.

The polyethylene terephthalate resin may be obtained by copolymerizing with, for example, 1.0 mol% or less, preferably 0.5 mol% or less, and more preferably 0.3 mol% or less, of a branching component, for example, an acid capable of forming a trifunctional ester, such as tricarballylic acid, trimellisic acid, or trimellitic acid, or a tetrafunctional ester, such as pyromellitic acid, or an alcohol capable of forming a trifunctional or tetrafunctional ester, such as glycerin, trimethylolpropane, or pentaerythritol.

In the polyethylene terephthalate resin used in the third embodiment, the terephthalic acid unit, the isophthalic acid unit, and the ethylene glycol unit preferably account for, of all the units excluding the terminals, 90 mol% or more, more preferably 95 mol% or more, further preferably 98 mol% or more, and still further preferably 99 mol% or more.

When one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min, the polyethylene terephthalate resin used in the third embodiment preferably has an absolute value of a heat of crystallization during a heating phase in a first cycle (hereinafter, sometimes referred to as "$\Delta H_{Tc1}$-1st") of the operation of less than 3 J/g. That is, it is preferred that a clear crystallization temperature (Tc1-1st) during the heating phase is not exhibited. By using such a resin, moldability tends to be improved. The reason for this is inferred to be that crystallization or solidification is more likely to occur during molding.

In addition, the polyethylene terephthalate resin used in the third embodiment preferably has an absolute value of the heat of crystallization during a cooling phase in the first cycle (hereinafter sometimes referred to as "$\Delta H_{Tc2}$-1st") of 3 J/g or more. That is, it is preferred to have a clear crystallization temperature during the cooling phase (Tc2-1st). Using such a resin tends to facilitate crystallization, improve mold release properties, and improve moldability. The preferred ranges of the Tc2-1st are the same as the matters and values described in the first embodiment.

As such a polyethylene terephthalate resin, recycled PET, in particular recycled PET derived from PET bottles, is preferred.

Further, the preferred ranges of the melting point (Tm-1st) in the first cycle of the polyethylene terephthalate resin used in the third embodiment are the same as the matters and values described in the first embodiment, and the preferred ranges are also the same.

When one cycle is defined as an operation in which, based on JIS K7121, the temperature is increased by DSC (differential scanning calorimetry) from 40°C to 300°C at a rate of temperature increase of 20°C/min, and then the temperature is reduced to 40°C at a rate of temperature cooling of -20°C/min, the polyethylene terephthalate resin used in the third embodiment preferably has an absolute value of the heat of crystallization during the heating phase in a second cycle ("$\Delta H_{Tc1}$-2nd") of the operation of less than 3 J/g. That is, it is preferred that a clear crystallization temperature (Tc1-2nd) during the heating phase is not exhibited. Having such a configuration tends to facilitate crystallization, improve mold release properties, and improve moldability.

As such a polyethylene terephthalate resin, bio-PET or recycled PET is preferred, and in particular recycled PET derived from PET bottles is preferred.

In addition, the polyethylene terephthalate resin used in the third embodiment preferably has an absolute value of the heat of crystallization during a cooling phase in the second cycle (hereinafter also referred to as "$\Delta H_{Tc2}$-2nd") of 3 J/g or more. That is, it is preferred to have a clear crystallization temperature during the cooling phase (Tc2-2nd). Having such a configuration tends to facilitate crystallization, improve mold release properties, and improve moldability. Further, the crystallization temperature during the cooling phase in the second cycle (Tc2-2nd) is preferably 150°C or higher, and more preferably 160°C or higher. By setting the Tc2-2nd to be equal to or higher than the above lower limit, crystallization tends to be facilitated and mold release properties tend to be further improved. Moreover, the Tc2-2nd is preferably 190°C or lower, more preferably 185°C or lower, further preferably 180°C or lower, still further preferably 175°C or lower, and may be 170°C or lower. By setting the Tc2-2nd to be equal to or lower than the above upper limit, the molding shrinkage rate tends to become smaller.

As such a polyethylene terephthalate resin, recycled PET, in particular recycled PET derived from PET bottles, is preferred.

Further, the preferred ranges of the melting point (Tm-2nd) from the second cycle onwards of the polyethylene terephthalate resin used in the third embodiment are the same as the matters and values described in the first embodiment, and the preferred ranges are also the same.

The polyethylene terephthalate resin used in the third embodiment preferably has an absolute value of the heat of crystallization ($\Delta H_{Tc1}$-1st) during the heating phase in the first cycle of less than 3 J/g and an absolute value of the heat of crystallization ($\Delta H_{Tc2}$-1st) during the cooling phase in the first cycle of 3 J/g or more. That is, it is preferred that a clear crystallization temperature during the heating phase (Tc1-1st) is not exhibited and that there is a clear crystallization temperature during the cooling phase (Tc2-1st). By using such a polyethylene terephthalate resin, the effects of improved mold release properties and improved surface appearance can be exhibited better.

In addition, the polyethylene terephthalate resin used in the third embodiment preferably has an absolute value of the heat of crystallization ($\Delta H_{Tc1}$-2nd) during the heating phase in the second cycle of less than 3 J/g and an absolute value of the heat of crystallization ($\Delta H_{Tc2}$-2nd) during the cooling phase in the second cycle of 3 J/g or more. That is, it is preferred that a clear crystallization temperature during the heating phase (Tc1-2nd) is not exhibited in the second cycle, and that there is a clear crystallization temperature during the cooling phase (Tc2-2nd) in the second cycle. By using such a polyethylene terephthalate resin, the effects of improved mold release properties and improved surface appearance can be exhibited better.

As such a polyethylene terephthalate resin, recycled PET, in particular recycled PET derived from PET bottles, is preferred.

The polyethylene terephthalate resin used in the first embodiment is, except for the points described above, the same as the polyethylene terephthalate resin used in the first embodiment.

<Resin blend ratio>

In the resin composition of the third embodiment, the mass ratio of the polybutylene terephthalate resin and the above-described specific polyethylene terephthalate resin with respect to a total of 100 parts by mass of the polybutylene terephthalate resin and the polyethylene terephthalate resin is from 10/90 to 90/10. In the resin composition of the third embodiment, the proportion of the polyethylene terephthalate resin is, with respect to a total of 100 parts by mass of the polybutylene terephthalate resin and the polyethylene terephthalate resin, preferably 15 parts by mass or more, and further, depending on the use, may be 20 parts by mass or more, 30 parts by mass or more, 40 parts by mass or more, 50 parts by mass or more, 55 parts by mass or more, or 60 parts by mass or more. Further, in the resin composition of the third embodiment, the proportion of the polyethylene terephthalate resin is, with respect to a total of 100 parts by mass of the polybutylene terephthalate resin and the polyethylene terephthalate resin, preferably 85 parts by mass or less, more preferably 80 parts by mass or less, further preferably 70 parts by mass or less, and depending on the use, may be 65 parts by mass or less, 60 parts by mass or less, 55 parts by mass or less, less than 50 parts by mass, 45 parts by mass or less, 40 parts by mass or less, 35 parts by mass or less, 30 parts by mass or less, or 25 parts by mass or less.

An example of the blend mode of the polybutylene terephthalate resin and the polyethylene terephthalate resin of the third embodiment is a blend in which the proportion of the polyethylene terephthalate resin is more than 50 parts by mass and 90 parts by mass or less with respect to a total of 100 parts by mass of the polybutylene terephthalate resin and the polyethylene terephthalate resin. By adopting such a mode, the effect of improving the surface appearance tends to be further improved.

Another example of the blend mode of the polybutylene terephthalate resin and the polyethylene terephthalate resin of the third embodiment is a blend in which the proportion of the polybuthylene terephthalate resin is more than 50 parts by mass and 90 parts by mass or less with respect to a total of 100 parts by mass of the polybutylene terephthalate resin and the polyethylene terephthalate resin. By adopting such a mode, mold release properties and impact resistance tend to be further improved. In particular, these effects tend to be effectively improved by setting the blend amount of the fibrous inorganic filler to from 20 to 40% by mass in the resin composition.

The total amount of the polybutylene terephthalate resin and the polyethylene terephthalate resin in the resin composition of the third embodiment is preferably 30% by mass or more, more preferably 35% by mass or more, further preferably 55% by mass or more, still further preferably 60% by mass or more, and still further 65% by mass or more. By setting the total amount to be equal to or more than the above lower limit, the effects of having excellent molding processability and excellent surface appearance of the molded article tend to be improved. Further, the total amount of the polybutylene terephthalate resin and the polyethylene terephthalate resin in the resin composition of the third embodiment is preferably 95% by mass or less, more preferably 88% by mass or less, further preferably 80% by mass or less, and still further preferably 75% by mass or less. By setting the total amount to be equal to or less than the above upper limit, mechanical strength and heat resistance due to the fibrous inorganic filler tend to be improved.

The resin composition of the third embodiment may contain only one type, or two or more types, of the polybutylene terephthalate resin and the polyethylene terephthalate resin, respectively. When two or more types are included, the total amount is preferably within the ranges described above.

<Fibrous inorganic filler>

The resin composition of the third embodiment further contains from 1 to 150 parts by mass of a fibrous inorganic filler with respect to a total of 100 parts by mass of the polybutylene terephthalate resin and the polyethylene terephthalate resin. By including the fibrous inorganic filler, the mechanical strength of the molded article obtained can be improved, and the molding shrinkage rate can also be effectively reduced.

Further, the preferred ranges of the fibrous inorganic filler are the same as the matters and values described in the second embodiment, and the preferred ranges are also the same.

The content of the fibrous inorganic filler in the resin composition of the third embodiment is also the same as the preferred range of the content described in relation to the resin composition of the second embodiment.

<Reactive compound>

The resin composition of the third embodiment may include a reactive compound. The reactive compound is preferably one or more types selected from the group consisting of a carbodiimide compound, an epoxy compound, a compound having an oxazoline group (ring), a compound having an oxazine group (ring), a compound having a carboxylic acid, and a compound having an amide group. An epoxy compound is particularly preferred because hydrolysis resistance tends to be improved and outgassing tends to be suppressed.

The epoxy compound may be a monofunctional epoxy compound or a polyfunctional epoxy compound, but a polyfunctional epoxy compound is preferred. Examples of the polyfunctional epoxy compound include a bisphenol A type epoxy compound, a bisphenol F type epoxy compound, a resorcin type epoxy compound, a novolak type epoxy compound, an alicyclic compound type diepoxy compound, a glycidyl ether, and epoxidized polybutadiene. More specifically, any alicyclic compound type epoxy compound, such as a bisphenol A type epoxy compound, a bisphenol F type epoxy compound, a resorcin type epoxy compound, a novolak type epoxy compound, vinylcyclohexene dioxide, and dicyclopentadiene oxide, can be preferably used.

Further, the epoxy compound may be a copolymer having a glycidyl group-containing compound as a constituent component. Examples thereof may include a copolymer of a glycidyl ester of an $\alpha,\beta$-unsaturated acid with one or more monomers selected from the group consisting of an $\alpha$-olefin, an acrylic acid, an acrylic ester, a methacrylic acid, a methacrylic ester, and styrene.

In addition, the epoxy compound is preferably a copolymer of an epoxy group-containing monomer and a styrene-based monomer, and may be a copolymer with another copolymerizable monomer. Examples of the styrene-based monomer constituting the copolymer of an epoxy group-containing monomer and a styrene-based monomer include glycidyl (meth)acrylate, glycidyl itaconate, and the like, Glycidyl methacrylate and glycidyl acrylate are preferred, and glycidyl methacrylate is particularly preferred. Examples of the styrene-based monomer include styrene, $\alpha$-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, tribromostyrene, and the like. Styrene and $\alpha$-methylstyrene are more preferred, and styrene is particularly preferred. Specific examples of the copolymer of an epoxy group-containing monomer and a styrene-based monomer include a glycidyl (meth)acrylate-styrene copolymer, a glycidyl (meth)acrylatestyrene-methyl (meth)acrylate, and the like, which are particularly preferred because outgassing tends to be suppressed.

Further, the epoxy compound may be an elastomer containing a glycidyl group. By including an elastomer containing a glycidyl group, a molded article having a higher impact resistance tends to be obtained. Examples of the elastomer containing a glycidyl group include a copolymer obtained by copolymerizing an $\alpha$-olefin, a glycidyl ester of an $\alpha,\beta$-unsaturated acid, and optionally an unsaturated monomer that is copolymerizable with these. The amount of the $\alpha$-olefin and the glycidyl ester of an $\alpha,\beta$-unsaturated acid is preferably 60% by mass or more of all the copolymerization components.

Examples of the $\alpha$-olefin include ethylene, propylene, butene-1, pentene-1, and the like. Two or more types of these may be used. Examples of the glycidyl ester of an $\alpha,\beta$-unsaturated acid include glycidyl acrylate, glycidyl methacrylate, glycidyl ethacrylate, glycidyl itaconate, and the like. Two or more types of these may be used. Examples of vinyl monomers that are copolymerizable with the above components include a vinyl ether, vinyl esters such as vinyl acetate and vinyl propionate, acrylates and methacrylates such as methyl, ethyl, propyl, butyl; acrylonitrile, styrene, and the like. Two or more types of these may be used.

Preferred examples of the elastomer containing a glycidyl group include an ethylene/glycidyl methacrylate copolymer, an ethylene/glycidyl methacrylate/vinyl acetate copolymer, an ethylene/glycidyl methacrylate/alkyl acrylate copolymer, an ethylene/alkyl acrylate/vinyl acetate copolymer, and the like. In particular, from the viewpoint of excellent toughness and further improving the heat-moisture resistance and impact resistance of the molded article, an ethylene/glycidyl methacrylate/alkyl acrylate (preferably butyl acrylate) copolymer is preferred. Specific examples of the elastomer containing a glycidyl group can be obtained under the trade name of "Lotader" (registered trademark) AX8900 and AX8700 manufactured by Arkema.

Further, the content of the reactive compound is the same as the matters and values described in the first embodiment, and the preferred ranges are also the same.

<Other components>

The resin composition of the third embodiment may optionally include other components in addition to those described above, as long as the various desired physical properties are not significantly impaired. Examples of other components include other thermoplastic resins such as a styrene-based resin and various resin additives. In addition, the resin composition may contain one type of such other components, or contain two or more types in any combination and ratio.

Specific examples of resin additives include a non-fibrous inorganic filler, a mold release agent, a stabilizer (thermal stabilizer, light stabilizer), a colorant (pigment, dye), a nucleating agent, a flame retardant, flame retardant aid, a filler, an antistatic agent, an antifogging agent, an antiblocking agent, a fluidity improver, a plasticizer, a dispersant, an antibacterial agent, and the like.

The details of the other components are the same as described in the first embodiment, and the preferred ranges are also the same.

In the resin composition of the third embodiment, the total amount of the polybutylene terephthalate resin, the polyethylene terephthalate resin, the fibrous inorganic filler, and optionally-added components is 100% by mass.

<Non-fibrous inorganic filler>

The resin composition of the third embodiment may include a non-fibrous inorganic filler. The details of the non-fibrous inorganic filler that can be used in the third embodiment are the same as the matters and values described in the first embodiment, and the preferred ranges are also the same. The amount added of the non-fibrous inorganic filler is also the same.

<Method for producing resin composition>

The resin composition of this embodiment can be produced by a conventional method for preparing resin compositions. Usually, each component and the various additives to be optionally added are thoroughly mixed together, and then melt-kneaded using a single-screw or twin-screw extruder. Alternatively, the resin composition of this embodiment can be prepared without mixing each component in advance, by pre-mixing only a part of the components, and feeding the mixture into an extruder using a feeder, and melt-kneading. Also, a masterbatch may be prepared by melxt-kneading a part of the components such as the colorant with a thermoplastic resin, and then adding the remaining components and melt-kneading the mixture.

In addition, when using an inorganic filler, it is preferred to feed the inorganic filler from a side feeder at a point along the cylinder of the extruder.

The heating temperature during melt-kneading can be normally selected as appropriate from the range of 220 to 300°C. If the temperature is too high, decomposition gas tends to be generated, which may cause opacity. Therefore, it is desirable to select a screw configuration that takes shear heat generation into consideration. In order to suppress decomposition during the kneading and subsequent molding, it is desirable to use an antioxidant and a heat stabilizer.

<Method for producing molded article>

The resin composition of this embodiment is molded according to a known method.

The method for producing the molded article is not particularly limited, and any molding method commonly used for resin compositions can be adopted. Examples include injection molding, ultra-high-speed injection molding, injection compression molding, two-color molding, gas-assisted blow molding, molding using a heat-insulated mold, molding using a rapid heating mold, foam molding (including supercritical fluid), insert molding, IMC (in-mold coating molding) molding, extrusion molding, sheet molding, thermoforming, rotational molding, lamination molding, press molding, blow molding, and the like, among which an injection molding method is preferred.

Details regarding the injection molding method may be found in the descriptions in paragraphs 0113 to 0116 of Japanese Patent Laid-Open No. 6183822 B, the contents of which are incorporated herein by reference.

Further, the mold temperature during mold molding such as injection molding is preferably from 40 to 150°C.

<Uses>

The resin composition of this embodiment is used as a molded article formed from the resin composition. The uses of the resin composition or molded article are not particularly limited, but the resin composition or molded article may be preferably used for an electrical/electronic devices or components, OA devices or components, information terminal devices or components, mechanical components, home appliances, vehicle components (interior/exterior of automobiles), construction materials, various containers, leisure goods/miscellaneous goods, lighting equipment, and the like. In particular, the resin composition of this embodiment is preferably used for members that emphasize surface appearance characteristics, for example, vehicle lamp components (e.g., housings, reflectors, bezels, extensions), vehicle exterior components such as wipers, door mirrors, stays for interior mirrors, outer handles, home appliance lighting equipment, and the like. Further, the resin composition of this embodiment is preferably used for a light reflector component in which a metal vapor-deposited film is formed on a part or the entire surface, and the metal-deposited film is in contact with the surface of the molded body. In addition, the resin composition of this embodiment is also preferably used for extrusion applications such as films and filaments.

[Examples]

The present invention will now be explained in more detail with reference to the following examples. The materials, usage amounts, proportions, processing details, processing procedures, and the like described in the following examples can be changed as appropriate without departing from the spirit of the present invention. Therefore, the scope of the present invention is not limited to the specific examples shown below.

If the measuring equipment and the like used in the examples is difficult to obtain due to discontinuation, for example, the measurements can be performed using other equipment with an equivalent performance.

1. The following raw materials were used.

[Table 1]

| Raw Material | Details |
|---|---|
| PBT-1 | Polybutylene terephthalate resin<br>Trade name: "NOVADURAN 5008", manufactured by Mitsubishi Engineering-Plastics Corporation<br>Intrinsic viscosity: 0.85 dL/g |
| PBT-2 | Polybutylene terephthalate resin<br>Processed product of frozen crushed powder of "NOVADURAN 5008, intrinsic viscosity: 0.85 dL/g", manufactured by Mitsubishi Engineering-Plastics Corporation Average particle size D40: 853 $\mu$m, bulk density: 0.559g/cm$^3$ |
| PBT-3 | Polybutylene terephthalate resin<br>Trade name: "NOVADURAN 5020", manufactured by Mitsubishi Engineering-Plastics Corporation<br>Intrinsic viscosity: 1.20 dL/g |
| PBT-4 | Polybutylene terephthalate resin<br>Trade name: "NOVADURAN 5007", manufactured by Mitsubishi Engineering-Plastics Corporation<br>Intrinsic viscosity: 0.70 dL/g |
| Virgin PET-1 | Polyethylene terephthalate resin<br>Trade name: "Novapet PBK1", manufactured by Mitsubishi Chemical Corporation<br>Intrinsic viscosity: 0.64 dL/g, isophthalic acid copolymer percentage 0 mol% |
| Virgin PET-2 | Polyethylene terephthalate resin<br>Trade name: "N1", manufactured by Indorama Ventures<br>Intrinsic viscosity: 0.81 dL/g, isophthalic acid copolymer percentage 1.7 mol% |
| Bio PET | Biomass-derived polyethylene terephthalate resin<br>Trade name: "N1B", manufactured by Indorama Ventures<br>Intrinsic viscosity: 0.13 dL/g, isophthalic acid copolymer percentage 1.7 mol% |

(continued)

| Raw Material | Details |
|---|---|
| PCR-PET | Bottle-derived recycled polyethylene terephthalate resin<br>Trade name: "N1-100", manufactured by Indorama Ventures<br>Intrinsic viscosity: 0.83 dL/g, isophthalic acid copolymer percentage 1.7 mol% |

[Table 2]

| Raw Material | Details |
|---|---|
| Styrene-based resin | Acrylonitrile-styrene copolymer (AS resin)<br>Trade name: "AP-A", manufactured by UMG-ABS,<br>Average particle size D50: 412 μm |
| Fibrous inorganic filler-1 | Glass fiber<br>Trade name: "T-187", manufactured by Nippon Electric Glass Co., Ltd.<br>Number average fiber diameter: 13 μm, number average fiber length: 3 mm |
| Fibrous inorganic filler-2 | Glass fiber<br>Trade name: "T-127", manufactured by Nippon Electric Glass Co., Ltd.<br>Number average fiber diameter: 13 μm, number average fiber length: 3 mm |
| Non-fibrous inorganic filler | Synthetic calcium carbonate<br>Trade name: "Brilliant-1500", manufactured by Shiraishi Calcium Kaisha, Ltd.<br>Average primary particle size 150 nm, specific gravity 2.8 |
| Reactive compound-1 | Ethylene-butyl acrylate-glycidyl methacrylate copolymer<br>Trade name: "Lotader" (registered trademark) AX8900, manufactured by Arkema<br>MFR: 6 g/10 min (190°C, 2.16 kgf) |
| Reactive compound-2 | Ortho-cresol novolak type epoxy resin<br>Polyglycidyl ether compound of an O-cresol/formaldehyde polycondensate<br>Trade name: "CNE-220", manufactured by Chang Chung Group<br>Epoxy equivalent: 215 (g/eq) |
| Reactive compound-3 | Bisphenol A type epoxy resin (liquid)<br>Trade name: "EP-17", manufactured by ADEKA<br>Epoxy equivalent: 185 (g/eq) |
| Reactive compound-4 | Glycidyl methacrylate-styrene-methyl methacrylate copolymer<br>Trade name: "Joncryle ADR4468", manufactured by BASF<br>Mw: 7250, epoxy equivalent: 310 g/mol |
| Mold release agent-1 | Montanic acid ester wax<br>Trade name: "Licowax E" powder, manufactured by Clariant |
| Mold release agent-2 | Oxidized polyethylene wax<br>Trade name: "Licowax PED522", manufactured by ADEKA |
| Mold release agent-3 | Ethylene bisstearamide -based wax<br>Trade name: "Light Amide WH255", manufactured by Kyoeisha Chemical Co., Ltd. |

[Table 3]

| Raw Material | Details |
|---|---|
| Stabilizer-1 | 1,3,5-tris(3,5-di-tert-butyl-4-hydroxyphenylmethyl)-2,4,6-trimethylbenzene<br>Trade name: "ADK Stab AO-330", manufactured by ADEKA, melting point 244°C |

(continued)

| Raw Material | Details |
|---|---|
| Stabilizer-2 | Pentaerythritol tetrakis[3-(3,5-di-tert-butyl-4-hydroxy)phenyl)propionate]<br>Trade name: "ADK Stab AO-60", manufactured by ADEKA, melting point 120°C |
| Stabilizer-3 | Pentaerythritol tetrakis-(3-dodecylthiopropionate)<br>Trade name: "Seenox 412S", manufactured by Shipro Kasei Kaisha, Ltd. |
| Stabilizer-4 | 3,9-Bis(2,6-di-tert-butyl-4-methylphenoxy)-2,4,8,10-tetraoxa-3,9-diphosphaspiro[5.5] undecane<br>Trade name: "ADK STAB PEP-36", manufactured by ADEKA, melting point 234°C |
| Stabilizer-5 | Mixture of n =1, 2 of $O=P(OH)_n(OC_{13}H_{37})_{3-n}$<br>Trade name: ADEKA STAB AX-71, manufactured by ADEKA |
| Stabilizer-6 | Hindered phenol compound<br>Pentaerythritol tetrakis(3-(3,5-di-tert-butyl-4-hydroxyphenyl)propionate)<br>Trade name: "Irganox 1010", manufactured by BASF Japan |
| CB-MB-1 | Carbon black masterbatch<br>Mixture of styrene-acrylonitrile copolymer resin (51% by mass), carbon black (48% by mass), and calcium stearate (1% by mass)<br>Trade name: "EX-3531", manufactured by Nippon Pigment Company, Ltd.<br>Carbon black: DBP oil absorption amount of 68 to 82 $cm^3$/100g |
| CB-MB- 2 | Carbon black masterbatch<br>Polybutylene terephthalate resin (70% by mass), carbon black (30% by mass)<br>Trade name: "i-star MBC0010", manufactured by Ichikin Co., Ltd.<br>Carbon black: number average particle size 24 nm, coloring power: 127%, DBP oil absorption amount of 95 $cm^3$/100g |
| CB-MB-3 | Carbon black masterbatch<br>Polybutylene terephthalate resin (81% by mass), carbon black (19% by mass)<br>Trade name: "RCB-20", manufactured by Mitsubishi Engineering-Plastics Corporation<br>Carbon black:<br>Trade name: "#650B", manufactured by Mitsubishi Chemical Corporation, number average particle size: 22 nm, coloring Power: 125%, DBP oil absorption amount: 114 $cm^3$/100g<br>Polybutylene terephthalate:<br>Trade name: "NOVADURAN 5008", manufactured by Mitsubishi Engineering-Plastics Corporation |

The details of the PET were as follows.

[Table 4]

|  |  | Virgin PET-1 | Virgin PET-2 | Bio PET | PCR-PET |
|---|---|---|---|---|---|
| Intrinsic viscosity | (dL/g) | 0.64 | 0.81 | 0.81 | 0.83 |
| Isophthalic acid copolymer percentage | (mol%) | 0.0 | 1.7 | 1.7 | 1.7 |

(continued)

|  |  | Virgin PET-1 | Virgin PET-2 | Bio PET | PCR-PET |
|---|---|---|---|---|---|
| DSC(1st run) | Tc1(°C) | 139 | No peak | No peak | No peak |
|  | $\Delta H_{Tc1}$(J/g) | -21.4 | - | - | - |
|  | Tm(°C) | 254 | 241 | 238 | 240 |
|  | $\Delta H_{Tm}$(J/g) | 43.5 | 64.1 | 58.3 | 52.3 |
|  | Tc2(°C) | No peak | No peak | No peak | 175 |
|  | $\Delta H_{Tc2}$(J/g) | - | - | - | -28.1 |
| DSC(2nd run) | Tc1(°C) | 166 | 176 | No peak | No peak |
|  | $\Delta H_{Tc1}$(J/g) | -22.7 | -22.6 | - | - |
|  | Tm(°C) | 252 | 243 | 243 | 245 |
|  | $\Delta H_{Tm}$(J/g) | 36.1 | 31.8 | 23.7 | 28.1 |
|  | Tc2(°C) | No peak | No peak | No peak | 162 |
|  | $\Delta H_{Tc2}$(J/g) | - | - | - | -24.5 |
| MVR(265°C×5kgf) | cm$^3$/10min | 110 | - | - | 31 |
| DEG | mol % | 2.0 | - | - | 2.2 |
| AV | eq/t | 46.7 | - | - | 39.9 |
| GPC | Mn | $0.85\times10^4$ | - | - | $1.4\times10^4$ |
|  | Mw | $2.5\times10^4$ | - | - | $4.0\times10^4$ |
|  | Mz | $4.4\times10^4$ | - | - | $7.3\times10^4$ |
|  | Mw/Mn | 3.0 | - | - | 2.9 |
| HPLC (% by mass) | Cyclic trimer | 0.87 | - | - | 0.36 |
|  | Cyclic tetramer | 0.26 | - | - | 0.10 |
|  | Cyclic pentamer | 0.13 | - | - | 0.03 |
|  | Total of cyclic forms | 1.26 | - | - | 0.49 |
| Metal element qualitative/semiquantitative analysis ($\mu$ g/g) | Na ($\mu$g/g) | n.d | - | - | 2.3 |
|  | Mg ($\mu$g/g) | 65 | - | - | 1.9 |
|  | P ($\mu$g/g) | 26 | - | - | 8.0 |
|  | Ca ($\mu$g/g) | n.d | - | - | 5.5 |
|  | Ti ($\mu$g/g) | n.d | - | - | 2.5 |
|  | Fe ($\mu$g/g) | 0.7 | - | - | 2.6 |
|  | Ge ($\mu$g/g) | n.d | - | - | n.d |
|  | Sb ($\mu$g/g) | 200 | - | - | 220 |

In the above table, "n. d" indicates that the measured value was below the detection limit. Detection limit values: Ca 0.2 ($\mu$g/g), Na 0.2 ($\mu$g/g), Ti 0.2 ($\mu$g/g), Ge 3 ($\mu$g/g)

<Measurement of intrinsic viscosity>

Polyethylene terephthalate resin pellets were dissolved in a mixed solvent of phenol/1,1,2,2-tetrachloroethane (mass ratio 1/1) so that the concentration was 1.00 g/dL by stirring at 110°C for 1 hour. The mixture was then cooled to 30°C. Using a fully automatic solution viscometer, the number of seconds for the sample solution to fall and the number of seconds for only the solvent to fall were measured at 30°C, and the intrinsic viscosity was calculated using the following formula (1).

$$\text{Intrinsic viscosity} = ((1+4K_H\eta_{sp})^{0.5}-1)/(2K_HC) \quad (1)$$

Here, $\eta_{sp}=\eta/\eta_0-1$, wherein $\eta$ is the number of seconds for the sample solution to fall, $\eta_0$ is the number of seconds for only the solvent to fall, C is the sample solution concentration (g/dL), and $K_H$ is Huggins' constant. $K_H$ was set at 0.33.
A fully automatic solution viscometer manufactured by Shibayama Scientific Co., Ltd. was used.

<Measurement by DSC>

The crystallization temperature, heat of crystallization, melting point, and heat of fusion of the polyethylene terephthalate resin were measured using a differential scanning calorimeter (DSC) based on JIS K7121. The temperature was raised from 40°C to 300°C at a rate of temperature increase of 20 °C/min in a nitrogen atmosphere, held at 300°C for 3 minutes, and then lowered to 40°C at a rate of temperature cooling of -20 °C/min. This was taken as one cycle. The temperature of the maximum peak due to crystallization during the heating phase was defined as crystallization temperature Tc1, and the heat of crystallization was determined as $\Delta H_{Tc1}$. The melting point Tm and the heat of fusion $\Delta H_{Tm}$ were determined from the peak at the time of fusion. The temperature of the maximum peak due to crystallization during the cooling phase was defined as crystallization temperature Tc2 and heat of crystallization $\Delta H_{Tc2}$. When the absolute value of the heat of crystallization $\Delta H$ of the peak during crystallization during the heating phase and the cooling phase was less than 3 J/g, or when there was no peak, such cases were classified as "no peak" in the above table.
The heat of fusion $\Delta H_{Tm}$ was taken to be the area surrounded by the endothermic peak and the baseline, the heat of crystallization $\Delta H_{TC1}$ was taken to be the area surrounded by the exothermic peak of crystallization which was confirmed below the melting point during the heating phase and the baseline, and the heat of crystallization $\Delta H_{TC2}$ was taken to be the area surrounded by the exothermic peak during the cooling phase and the baseline.
A "DSC7020" manufactured by Hitachi High-Tech Science Corporation was used as the differential scanning calorimeter.

<Measurement of MVR>

The MVR was determined by measuring the melt flow volume MVR (unit: cm$^3$/10 minutes) per unit time of the pellets obtained above using a melt indexer under conditions of 265°C and a load of 5 kgf.
The melt indexer used was manufactured by Takara Kougyou.

<Measurement of isophthalic acid amount and DEG amount>

The amount of isophthalic acid and the amount of DEG (diethylene glycol) in the polyethylene terephthalate resin were measured by $^1$H-NMR.
The $^1$H-NMR measurement was performed using an AVANC III (manufactured by Bruker BioSpin).

<Measurement of terminal carboxyl group content (AV)>

A sample was obtained by pulverizing the polyethylene terephthalate resin, then drying in a hot air dryer at 140°C for 15 minutes, and cooling to room temperature in a desiccator. From the sample, 0.1 g was accurately weighed and collected in a test tube, to which 3 mL of benzyl alcohol was added, and the mixture was made to dissolve at 195°C for 3 minutes while blowing dry nitrogen gas. Then, 5 mL of chloroform was gradually added, the mixture was cooled to room temperature, 1 to 2 drops of phenol red indicator were added to the solution, and titration was performed with a 0.1 N solution of sodium hydroxide in benzyl alcohol under stirring while blowing dry nitrogen gas. The titration was ended when the color changed from yellow to red. In addition, as a blank, the same operation was performed without dissolving the polyester sample, and the terminal carboxyl group content (acid value) was calculated using the following formula.

$$\texttt{Terminal carboxyl group content (eq/ton)} = \texttt{(a-b)} \times \texttt{0.1} \times \texttt{f/w}$$

In the formula, a is the amount ($\mu$L) of the 0.1 N solution of sodium hydroxide in benzyl alcohol required for the titration, and b is the amount ($\mu$L) of the 0.1 N solution of sodium hydroxide in benzyl alcohol required for the titration without a sample, w is the amount (g) of the polyester sample, and f is the titer of 0.1 N solution of sodium hydroxide in benzyl alcohol.

<Measurement by GPC>

The molecular weight (Mw, Mn, and Mz) of the polyethylene terephthalate resin was measured as follows.
The polyethylene terephthalate resin was weighed, a predetermined amount of HFIP (hexafluoro-2-propanol) and a 10 mM-$CF_3$COONa eluent were added, and the resin was allowed to stand overnight at room temperature to dissolve. Next, filtration was performed using a 0.45 $\mu$m PTFE cartridge filter. The molecular weight of the dissolved sample (filtrate) was measured by GPC. A cubic approximation curve using standard PMMA was used for the calibration curve, and taken as the molecular weight in terms of PMMA.
In the measurement by GPC, an HLC-8420GPC (manufactured by Tosoh) was used as a column.

2. Example 1-1 to 1-4, Comparative Example 1-1, 1-2

<Compound>

Each of the components shown in Tables 1 to 3 were uniformly mixed in the proportions (parts by mass) shown in Table 5 or Table 6 using a tumbler mixer, the mixture was then melt-kneaded using a twin-screw extruder ("TEX30$\alpha$" manufactured by Japan Steel Works, Ltd.) at a cylinder set temperature of 260°C and a screw rotation speed of 200 rpm, and the obtained resin composition was rapidly cooled in a water tank and pelletized using a pelletizer to obtain pellets of the resin composition.

<Unnotched Charpy impact strength>

The resin composition pellets obtained above were dried at 120°C for 5 hours, and then JIS K7139 multipurpose test specimens (4 mm thick) were injection-molded using an injection molding machine ("NEX 80", manufactured by Nissei Plastic Industrial Co., Ltd.) under conditions of a cylinder temperature of 265°C and a mold temperature of 80°C.
Using the multipurpose test specimens (4 mm thick), the unnotched Charpy impact strength (unit: KJ/m$^2$) was measured based on the JIS K7111-1 standard.

<Molding shrinkage rate>

The pellets obtained above were dried at 120°C for 5 hours, and then a molded article (length 100 mm, width 100 mm, thickness 2.0 mm) was molded using a NEX80-9E injection molding machine manufactured by Nissei Plastic Industrial Co., Ltd., at a cylinder temperature of 260°C and a mold temperature of 80°C. The obtained test specimen was conditioned for 24 hours or more under an environment of room temperature 23°C and humidity 50% RH.
Then, the dimensions in the MD (Machine Direction, also referred to as flow direction) and TD (Transverse Direction, also referred to as perpendicular direction) directions of the obtained test specimen were measured, and the molding shrinkage rate (unit: %) was calculated based on the dimensions of the mold.

<Box-shape mold release properties>

The pellets obtained above were dried at 120°C for 5 hours, and box-shape molded articles having a thickness of 1.5 mmt and external dimensions of 30×50×15 mm were molded using an injection molding machine manufactured by Japan Steel Works, Ltd. (clamping force 150 T), under conditions of a cylinder temperature of 265°C, a mold temperature of 40°C, and a cooling time of 30, 20, or 15 seconds. The maximum mold release resistance value (unit: MPa) when the ejector pin was pressed to release the mold was evaluated as the mold release resistance.
The unit is indicated as MPa.
The measurement was carried out using an internal pressure measurement system "Mold Marshalling System (registered trademark)", which uses an ejector pin-shaped pressure sensor "EP Sensor (registered trademark)" manufactured by Futaba Corporation with a built-in pressure sensing element. If the maximum mold release resistance value is 15 MPa or less, it can be determined that there is no problem when it is used as an actual product.

<Nominal tensile strain at break>

The pellets obtained above were dried at 120°C for 5 hours, then multipurpose test specimens type A1 defined in JIS K7139 were produced using an injection molding machine "J-85AD-60H" manufactured by Japan Steel Works, Ltd., under conditions of a cylinder temperature of 265°C and a mold temperature of 80°C, and the nominal tensile strain at break was measured based on the JIS K7161-1 standard.

<Fogging resistance>

The pellets obtained above were dried at 120°C for 5 hours, and then a molded article (length 100 mm, width 100 mm, thickness 2.0 mm) was molded using a NEX80-9E injection molding machine manufactured by Nissei Plastic Industrial Co., Ltd., at a cylinder temperature of 265°C and a mold temperature of 80°C. The obtained molded article was crushed into pellet size, 5 g was placed in a test tube ($\phi$ 20×160 mm), a lid of heat-resistant glass (Tempax glass $\phi$ 25×2 mm) was placed on the test tube, and then a heat treatment was carried out at 160°C for 24 hours. After the heat treatment was completed, deposits due to decomposed matter sublimated from the resin composition were deposited on the inside of the heat-resistant glass plate. The haze of the heat-resistant glass plate after the heat treatment was measured using a haze meter "TC-HIIIDPK" manufactured by Tokyo Denshoku Co., Ltd., and was used as a fogging resistance index.
The unit is shown as a %.
The lower the haze value, the better the fogging resistance.

<Mold deposit evaluation>

The pellets obtained above were dried at 120°C for 5 hours, and 300 shots of molded articles of 27 mm long axis × 15 mm short axis × 3 mm thickness were consecutively molded using an injection molding machine manufactured by Sumitomo Heavy Industries, Ltd. (clamping force 18 T), under conditions of a cylinder temperature 280°C, a mold temperature of 35°C, and a cooling time of 2 seconds. Then, the state of deposit adhesion on the mold surface was visually observed. Cases of "no adhesion" were evaluated with an A, and cases of "adhesion present" were evaluated with a B.

[Table 5]

| | | | Example 1-1 | Example 1-2 | Example 1-3 | Comparative Example 1-1 |
|---|---|---|---|---|---|---|
| Composition | | PBT-1 | 61.7 | 61.7 | 61.7 | 61.7 |
| | | PBT-2 | 5.6 | 5.6 | 5.6 | 5.6 |
| | | PBT-3 | 11.8 | 11.8 | 11.8 | 11.8 |
| | | Virgin PET-1 | | | | 20.8 |
| | | Virgin PET-2 | | | 20.8 | |
| | | Bio PET | | 20.8 | | |
| | | PCR-PET | 20.8 | | | |
| | | Styrene-based resin | 4.8 | 4.8 | 4.8 | 4.8 |
| | | Reactive compound-2 | | | | |
| | | Reactive compound-4 | 0.1 | 0.1 | 0.1 | 0.1 |
| | | Mold release agent-1 | 0.1 | 0.1 | 0.1 | 0.1 |
| | | Mold release agent-2 | 0.3 | 0.3 | 0.3 | 0.3 |
| | | Non-fibrous inorganic filler | 4.4 | 4.4 | 4.4 | 4.4 |
| | | Stabilizer-1 | 0.1 | 0.1 | 0.1 | 0.1 |
| | | Stabilizer-5 | | | | |
| | | Stabilizer-6 | | | | |
| | | CB-MB-1 | 0.6 | 0.6 | 0.6 | 0.6 |
| | | CB-MB-2 | 2.3 | 2.3 | 2.3 | 2.3 |
| | | CB-MB-3 | | | | |
| Unnotched Charpy impact strength (kJ/m$^2$) | | | 101 | 113 | 94 | 65 |
| Impact strength molding conditions | | Cylinder temperature (°C) | 265 | 265 | 265 | 265 |
| | | Mold temperature (°C) | 80 | 80 | 80 | 80 |
| Molding shrinkage rate (%) | | Molding shrinkage rate (MD) | 1.47 | 1.46 | 1.44 | 1.59 |
| | | Molding shrinkage rate (TD) | 1.44 | 1.45 | 1.42 | 1.60 |
| Shrinkage rate molding conditions | | Cylinder temperature (°C) | 260 | 260 | 260 | 260 |
| | | Mold temperature (°C) | 80 | 80 | 80 | 80 |
| Box mold release | | Mold release resistance (cooling time 30 s) (MPa) | 3.4 | 3.8 | 3.8 | Bursting |
| | | Mold release resistance (cooling time 20 s) (MPa) | 3.5 | 4.0 | 4.1 | Bursting |
| | | Mold release resistance (cooling time 15 s) (MPa) | - | - | - | - |
| Box mold release molding conditions | | Cylinder temperature (°C) | 265 | 265 | 265 | 265 |
| | | Mold temperature (°C) | 40 | 40 | 40 | 40 |
| Nominal tensile strain at break | | | 10.1 | 7.2 | 9.2 | 4.1 |
| Nominal strain molding conditions | | Cylinder temperature (°C) | 265 | 265 | 265 | 265 |
| | | Mold temperature (°C) | 80 | 80 | 80 | 80 |
| Fogging resistance (Haze %) | | | 0.6 | 1.0 | 1.6 | 2.2 |

(continued)

|  | | Example 1-1 | Example 1-2 | Example 1-3 | Comparative Example 1-1 |
|---|---|---|---|---|---|
| Fogging resistance molding conditions | Cylinder temperature (°C) | 265 | 265 | 265 | 265 |
|  | Mold temperature (°C) | 80 | 80 | 80 | 80 |
| Mold deposits | | A | A | A | B |
| Mold deposits molding conditions | Cylinder temperature (°C) | 280 | 280 | 280 | 280 |
|  | Mold temperature (°C) | 35 | 35 | 35 | 35 |

[Table 6]

|  | | | Example 1-4 | Comparative Example 1-2 |
|---|---|---|---|---|
| Composition | | PBT-1 | 70.0 | 70.0 |
|  | | PBT-2 | | |
|  | | PBT-3 | | |
|  | | Virgin PET-1 | | 30.0 |
|  | | Virgin PET-2 | | |
|  | | Bio PET | | |
|  | | PCR-PET | 300 | |
|  | | Styrene-based resin | | |
|  | | Reactive compound-2 | 0.5 | 0.5 |
|  | | Reactive compound-4 | | |
|  | | Mold release agent-1 | | |
|  | | Mold release agent-2 | 0.3 | 0.3 |
|  | | Non-fibrous inorganic filler | | |
|  | | Stabilizer-1 | | |
|  | | Stabilizer-5 | 0.1 | 0.1 |
|  | | Stabilizer- 6 | 0.3 | 0.3 |
|  | | CB-MB-1 | | |
|  | | CB-MB-2 | | |
|  | | CB-MB-3 | 2.1 | 2.1 |
| Unnotched Charpy impact strength (kJ/m$^2$) | | | 59 | 41 |
| Impact strength molding conditions | | Cylinder temperature (°C) | 265 | 265 |
|  | | Mold temperature (°C) | 80 | 80 |
| Molding shrinkage rate (%) | | Molding shrinkage rate (MD) | 1.67 | 1.79 |
|  | | Molding shrinkage rate (TD) | 1.72 | 1.80 |
| Shrinkage rate molding conditions | | Cylinder temperature (°C) | 260 | 260 |
|  | | Mold temperature (°C) | 80 | 80 |

(continued)

|  |  | Example 1-4 | Comparative Example 1-2 |
|---|---|---|---|
| Box mold release | Mold release resistance (cooling time 30 s) (MPa) | - | - |
|  | Mold release resistance (cooling time 20 s) (MPa) | 5.8 | 5.0 |
|  | Mold release resistance (cooling time 15 s) (MPa) | 5.5 | 4.7 |
| Box mold release molding conditions | Cylinder temperature (°C) | 265 | 265 |
|  | Mold temperature (°C) | 40 | 40 |
| Nominal tensile strain at break |  | 11.7 | 4.6 |
| Nominal strain molding conditions | Cylinder temperature (°C) | 265 | 265 |
|  | Mold temperature (°C) | 80 | 80 |
| Fogging resistance (Haze %) |  | - | - |
| Fogging resistance molding conditions | Cylinder temperature (°C) | 265 | 265 |
|  | Mold temperature (°C) | 80 | 80 |
| Mold deposits |  | - | - |
| Mold deposits molding conditions | Cylinder temperature (°C) | 280 | 280 |
|  | Mold temperature (°C) | 35 | 35 |

3. Examples 2-1 to 2-3 and Comparative Examples 2-1 to 2-3

<Compound>

Each of the components, except for the glass fiber, shown in Tables 1 to 3 were uniformly mixed in the proportions (parts by mass) shown in Table 7 or 8 using a tumbler mixer, the mixture was then charged into the hopper of a twin-screw extruder ("TEX30α" manufactured by Japan Steel Works, Ltd.), the glass fiber was fed from a side feeder, and melt-kneading was carried out at a cylinder set temperature of 260°C and a screw rotation speed of 200 rpm to obtain a resin composition. The resin composition was rapidly cooled in a water tank and pelletized using a pelletizer to obtain pellets of the resin composition.

<Box-shape mold release properties>

The pellets obtained above were dried at 120°C for 5 hours, and box-shape molded articles having a thickness of 1.5 mmt and external dimensions of 30×50×15 mm were molded using an injection molding machine manufactured by Sumitomo Heavy Industries, Ltd. (clamping force 50 T), under conditions of a cylinder temperature 280°C, a mold temperature of 40°C, and cooling time of 30 seconds. The maximum mold release resistance value (unit: MPa) when the ejector pin was pressed to release the mold was evaluated as the mold release resistance. The measurement was carried out using an internal pressure measurement system "Mold Marshalling System (registered trademark)", which uses an ejector pin-shaped pressure sensor "EP Sensor (registered trademark)" manufactured by Futaba Corporation with a built-in pressure sensing element. If the maximum mold release resistance value is 15 MPa or less, it can be determined that there is no problem when it is used as an actual product.

The <molding shrinkage rate> and <unnotched Charpy impact strength> were measured in the same manner as in Example 1-1. However, the cylinder temperature and mold temperature were as shown in Table 7.

<High-speed bending>

The resin composition pellets obtained above were dried at 120°C for 5 hours, and then JIS K7139 multipurpose test specimens (4 mm thick) were injection-molded using an injection molding machine (J-85AD-60H) under conditions of a cylinder temperature of 280°C and a mold temperature of 130°C. Using the above-described multipurpose test specimens (4 mm thick), a notched Charpy test specimen was produced based on the JIS K7111-1 standard. Using an Instron 2 kN (manufactured by Instron), the bending strength (unit: N) was measured by applying an indenter to the rear of the notched portion with the notched portion facing down at a distance between fulcrums of 64 mm and a test speed of 1,000 mm/min.

<Grain appearance>

The resin composition pellets obtained above were dried at 120°C for 5 hours, then using an injection molding machine manufactured by Japan Steel Works Ltd., (clamping force 100T), molded articles (length 60 mm, width 60 mm, thickness 1.5 mm, embossed with 15 μm grains on the surface) were molded under conditions of a cylinder temperature of 270°C and a mold temperature of 140°C, a cooling time of 25 seconds and the surface was observed.

A: Articles having evenness in the embossed grains on the surface
B: Articles having no evenness in the embossed grains on the surface

[Table 7]

| | | Example 2-1 | Comparative Example 2-1 | Example 2-2 |
|---|---|---|---|---|
| Composition | PBT-1 | 13.2 | 13.2 | 13.2 |
| | PBT-4 | 16.9 | 16.9 | 16.8 |
| | Virgin PET-1 | 0.0 | 69.9 | 0.0 |
| | PCR-PET | 69.9 | 0.0 | 70.0 |
| | Reactive compound-1 | 5.1 | 5.1 | 5.0 |
| | Reactive compound-3 | 0.3 | 0.3 | 0.3 |
| | Mold release agent-3 | 0.5 | 0.5 | 0.5 |
| | Stabilizer-2 | 0.3 | 0.3 | 0.3 |
| | Stabilizer-3 | 0.3 | 0.3 | 0.3 |
| | Stabilizer-4 | 0.2 | 0.2 | 0.0 |
| | CB-MB-2 | 11.2 | 11.2 | 11.2 |
| | Fibrous inorganic filler-2 | 50.6 | 50.6 | 50.5 |
| Box mold release | Mold release resistance (cooling time 30 s) (MPa) | 13 | 21 | 16 |
| Box mold release molding conditions | Cylinder temperature (°C) | 280 | 280 | 280 |
| | Mold temperature (°C) | 40 | 40 | 40 |
| High-speed bending strength (MPa) | | 370 | 350 | 370 |
| High-speed bending molding conditions | Cylinder temperature (°C) | 280 | 280 | 280 |
| | Mold temperature (°C) | 130 | 130 | 130 |
| Grain appearance | | A | B | - |
| Grain appearance molding conditions | Cylinder temperature (°C) | 270 | 270 | 270 |
| | Mold temperature (°C) | 140 | 140 | 140 |

[Table 8]

| | | Comparative Example 2-2 | Example 2-3 | Comparative Example 2-3 |
|---|---|---|---|---|
| | PBT-1 | 13.2 | 13.2 | 13.2 |

(continued)

| | | Comparative Example 2-2 | Example 2-3 | Comparative Example 2-3 |
|---|---|---|---|---|
| Composition | PBT-4 | 16.9 | 16.8 | 16.9 |
| | Virgin PET-1 | 70.0 | 0.0 | 70.0 |
| | PCR-PET | 0.0 | 70.0 | 0.0 |
| | Reactive compound-1 | 5.0 | 5.0 | 5.0 |
| | Reactive compound-3 | 0.3 | 0.0 | 0.0 |
| | Mold release agent-3 | 0.5 | 0.5 | 0.5 |
| | Stabilizer-2 | 0.3 | 0.3 | 0.3 |
| | Stabilizer-3 | 0.3 | 0.3 | 0.3 |
| | Stabilizer-4 | 0.0 | 0.2 | 0.2 |
| | CB-MB-2 | 11.2 | 11.2 | 11.2 |
| | Fibrous inorganic filler-2 | 50.5 | 50.4 | 50.4 |
| Box mold release | Mold release resistance (cooling time 30 s) (MPa) | 22 | 22 | 28 |
| Box mold release molding conditions | Cylinder temperature (°C) | 280 | 280 | 280 |
| | Mold temperature (°C) | 40 | 40 | 40 |
| High-speed bending strength (MPa) | | 340 | 360 | 340 |
| High-speed bending molding conditions | Cylinder temperature (°C) | 280 | 280 | 280 |
| | Mold temperature (°C) | 130 | 130 | 130 |
| Grain appearance | | - | - | - |
| Grain appearance molding conditions | Cylinder temperature (°C) | 270 | 270 | 270 |
| | Mold temperature (°C) | 140 | 140 | 140 |

4. Examples 3-1 to 3-6 and Comparative Examples 3-1 to 3-4

<Compound>

Each of the components, except for the glass fiber, shown in Tables 1 to 3 were uniformly mixed in the proportions (parts by mass) shown in Table 9 or 10 using a tumbler mixer, the mixture was then charged into the hopper of a twin-screw extruder ("TEX30$\alpha$" manufactured by Japan Steel Works, Ltd.), the glass fiber was fed from a side feeder, and melt-kneading was carried out at a cylinder set temperature of 260°C and a screw rotation speed of 200 rpm to obtain a resin composition. The resin composition was rapidly cooled in a water tank and pelletized using a pelletizer to obtain pellets of the resin composition.

The <molding shrinkage rate> and <unnotched Charpy impact strength> were measured in the same manner as in Example 1-1. However, the cylinder temperature and mold temperature were as shown in Table 9 or 10.

[Table 9]

| | | Example 3-1 | Comparative Example 3-1 | Example 3-2 | Comparative Example 3-2 | Example 3-3 |
|---|---|---|---|---|---|---|
| Composition | PBT-1 | 69.9 | 69.9 | 61.7 | 61.7 | 61.7 |
| | PBT-2 | 0.0 | 0.0 | 5.6 | 5.6 | 5.6 |
| | PBT-3 | 0.0 | 0.0 | 11.8 | 11.8 | 11.8 |
| | PBT-4 | 0.0 | 0.0 | 0.0 | 0.0 | 0.0 |
| | Virgin PET-1 | 0.0 | 30.1 | 0.0 | 20.8 | 0.0 |
| | Virgin PET-2 | 0.0 | 0.0 | 0.0 | 0.0 | 0.0 |
| | Bio PET | 0.0 | 0.0 | 0.0 | 0.0 | 0.0 |
| | PCR-PET | 30.1 | 0.0 | 20.8 | 0.0 | 20.8 |
| | Styrene-based resin | 0.0 | 0.0 | 5.8 | 5.8 | 5.4 |
| | Fibrous inorganic filler-1 | 44.6 | 44.6 | 20.3 | 20.3 | 12.7 |
| | Non-fibrous inorganic filler | 0.0 | 0.0 | 5.3 | 5.3 | 4.9 |
| | Reactive compound-1 | 0.0 | 0.0 | 0.0 | 0.0 | 0.0 |
| | Reactive compound-2 | 0.7 | 0.7 | 0.0 | 0.0 | 0.0 |
| | Reactive compound-3 | 0.0 | 0.0 | 0.0 | 0.0 | 0.0 |
| | Reactive compound-4 | 0.0 | 0.0 | 0.1 | 0.1 | 0.1 |
| | Mold release agent-1 | 0.0 | 0.0 | 0.1 | 0.1 | 0.1 |
| | Mold release agent-2 | 0.4 | 0.4 | 0.4 | 0.4 | 0.4 |
| | Mold release agent-3 | 0.0 | 0.0 | 0.0 | 0.0 | 0.0 |
| | Stabilizer-1 | 0.0 | 0.0 | 0.1 | 0.1 | 0.1 |
| | Stabilizer-2 | 0.4 | 0.4 | 0.0 | 0.0 | 0.0 |
| | Stabilizer-3 | 0.0 | 0.0 | 0.0 | 0.0 | 0.0 |
| | Stabilizer-4 | 0.0 | 0.0 | 0.0 | 0.0 | 0.0 |
| | CB-MB-1 | 0.0 | 0.0 | 0.7 | 0.7 | 0.6 |
| | CB-MB-2 | 0.0 | 0.0 | 2.7 | 2.7 | 2.5 |
| | CB-MB-3 | 3.0 | 3.0 | 0.0 | 0.0 | 0.0 |
| Molding shrinkage rate (%) | MD | 0.31 | 0.33 | 0.48 | 0.50 | 0.66 |
| | TD | 0.85 | 0.94 | 0.93 | 1.01 | 1.00 |

(continued)

|  | | Example 3-1 | Comparative Example 3-1 | Example 3-2 | Comparative Example 3-2 | Example 3-3 |
|---|---|---|---|---|---|---|
| Shrinkage rate molding conditions | Cylinder temperature (°C) | 265 | 265 | 260 | 260 | 260 |
| | Mold temperature (°C) | 80 | 80 | 80 | 80 | 80 |
| Unnotched Charpy impact strength $(kJ/m^2)$ | | 41 | 37 | 26 | 26 | 24 |
| Impact strength molding conditions | Cylinder temperature (°C) | 265 | 265 | 265 | 265 | 265 |
| | Mold temperature (°C) | 80 | 80 | 80 | 80 | 80 |

[Table 10]

| | | Example 3-4 | Example 3-5 | Comparative Example 3-3 | Example 3-6 | Comparative Example 3-4 |
|---|---|---|---|---|---|---|
| Composition | PBT-1 | 61.7 | 61.7 | 61.7 | 13.2 | 13.2 |
| | PBT-2 | 5.6 | 5.6 | 5.6 | 0 | 0 |
| | PBT-3 | 11.8 | 11.8 | 11.8 | 0 | 0 |
| | PBT-4 | 0.0 | 0.0 | 0.0 | 16.9 | 16.9 |
| | Virgin PET-1 | 0.0 | 0.0 | 20.8 | 0 | 69.9 |
| | Virgin PET-2 | 20.8 | 0.0 | 0.0 | 0 | 0 |
| | Bio PET | 0.0 | 20.8 | 0.0 | 0 | 0 |
| | PCR-PET | 0.0 | 0.0 | 0.0 | 69.9 | 0 |
| | Styrene-based resin | 5.4 | 5.4 | 5.4 | 0 | 0 |
| | Fibrous inorganic filler-1 | 12.7 | 12.7 | 12.7 | 50.6 | 50.6 |
| | Non-fibrous inorganic filler | 4.9 | 4.9 | 4.9 | 0 | 0 |
| | Reactive compound-1 | 0.0 | 0.0 | 0.0 | 5.1 | 5.1 |
| | Reactive compound-2 | 0.0 | 0.0 | 0.0 | 0 | 0 |
| | Reactive compound-3 | 0.0 | 0.0 | 0.0 | 0.3 | 0.3 |
| | Reactive compound-4 | 0.1 | 0.1 | 0.1 | 0 | 0 |
| | Mold release agent-1 | 0.1 | 0.1 | 0.1 | 0 | 0 |
| | Mold release agent-2 | 0.4 | 0.4 | 0.4 | 0 | 0 |
| | Mold release agent-3 | 0.0 | 0.0 | 0.0 | 0.5 | 0.5 |
| | Stabilizer-1 | 0.1 | 0.1 | 0.1 | 0 | 0 |
| | Stabilizer-2 | 0.0 | 0.0 | 0.0 | 0.3 | 0.3 |
| | Stabilizer-3 | 0.0 | 0.0 | 0.0 | 0.3 | 0.3 |
| | Stabilizer-4 | 0.0 | 0.0 | 0.0 | 0.2 | 0.2 |
| | CB-MB-1 | 0.6 | 0.6 | 0.6 | 0 | 0 |
| | CB-MB-2 | 2.5 | 2.5 | 2.5 | 11.2 | 11.2 |
| | CB-MB-3 | 0.0 | 0.0 | 0.0 | 0 | 0 |
| Molding shrinkage rate (%) | MD | 0.66 | 0.66 | 0.68 | 0.25 | 0.26 |
| | TD | 0.99 | 0.99 | 1.10 | 0.84 | 0.89 |

(continued)

| | | Example 3-4 | Example 3-5 | Comparative Example 3-3 | Example 3-6 | Comparative Example 3-4 |
|---|---|---|---|---|---|---|
| Shrinkage rate molding conditions | Cylinder temperature (°C) | 260 | 260 | 260 | 280 | 280 |
| | Mold temperature (°C) | 80 | 80 | 80 | 140 | 140 |
| Unnotched Charpy impact strength (kJ/m$^2$) | | 25 | 23 | 20 | 59 | 52 |
| Impact strength molding conditions | Cylinder temperature (°C) | 265 | 265 | 265 | 280 | 280 |
| | Mold temperature (°C) | 80 | 80 | 80 | 140 | 140 |

**Claims**

1. A resin composition comprising a polybutylene terephthalate resin and a polyethylene terephthalate resin,

   wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and
   wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) and/or an absolute value of a heat of crystallization during the heating phase in a second cycle ($\Delta H_{Tc1}$-2nd) of the operation of less than 3 J/g.

2. The resin composition according to claim 1 comprising a polybutylene terephthalate resin and a polyethylene terephthalate resin,

   wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and
   wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value of a heat of crystallization during a heating phase in a first cycle ($\Delta H_{Tc1}$-1st) of the operation of less than 3 J/g.

3. The resin composition according to claim 1 comprising a polybutylene terephthalate resin and a polyethylene terephthalate resin,

   wherein a mass ratio of the polybutylene terephthalate resin and the polyethylene terephthalate resin with respect to a total of 100 parts by mass of the polybutylene terephthalate resin and the polyethylene terephthalate resin is from 10/90 to 90/10, and
   wherein, when one cycle is defined as an operation in which, based on JIS K7121, a temperature is increased by DSC (differential scanning calorimetry) from 40°C to 300°C at a rate of temperature increase of 20°C/min and then the temperature is reduced to 40°C at a rate of temperature cooling of -20°C/min, the polyethylene terephthalate resin has an absolute value a heat of crystallization during the heating phase in a second cycle ($\Delta H_{Tc1}$-2nd) of the operation of less than 3 J/g.

4. The resin composition according to any one of claims 1 to 3, wherein the polyethylene terephthalate resin comprises a unit derived from an isophthalic acid, and the unit derived from the isophthalic acid is 0.5 mol% or more and 15 mol% or less of all units derived from a dicarboxylic acid component contained in the polyethylene terephthalate resin.

5. The resin composition according to any one of claims 1 to 3, wherein the polyethylene terephthalate resin has an intrinsic viscosity of 0.60 dL/g or more.

6. The resin composition according to any one of claims 1 to 3, which comprises from 1 to 150 parts by mass of a fibrous inorganic filler with respect to a total of 100 parts by mass of the polybutylene terephthalate resin and the polyethylene terephthalate resin.

7. The resin composition according to any one of claims 1 to 3, which comprises from 1 to 100 parts by mass of a non-fibrous inorganic filler with respect to a total of 100 parts by mass of the polybutylene terephthalate resin and the polyethylene terephthalate resin.

8. The resin composition according to claim 7, wherein the non-fibrous inorganic filler comprises a particulate filler.

9. The resin composition according to any one of claims 1 to 3, wherein the polyethylene terephthalate resin comprises a recycled product.

10. The resin composition according to any one of claims 1 to 3, wherein the polyethylene terephthalate resin contains a recycled product, and a content of a cyclic trimer contained in the polyethylene terephthalate resin is 0.8% by mass or less.

11. The resin composition according to any one of claims 1 to 3, wherein the polyethylene terephthalate resin comprises a polyethylene terephthalate resin in which at least a part of a raw material is a bio-derived raw material.

12. The resin composition according to any one of claims 1 to 3, wherein a proportion of the polyethylene terephthalate resin with respect to a total of 100 parts by mass of the polybutylene terephthalate resin and the polyethylene terephthalate resin is less than 50 parts by mass.

13. The resin composition according to any one of claims 1 to 3, wherein a proportion of the polyethylene terephthalate resin with respect to a total of 100 parts by mass of the polybutylene terephthalate resin and the polyethylene terephthalate resin is more than 50 parts by mass.

14. The resin composition according to any one of claims 1 to 3, which comprises from 0.01 to 8 parts by mass of carbon black with respect to a total of 100 parts by mass of the polybutylene terephthalate resin and the polyethylene terephthalate resin.

15. The resin composition according to any one of claims 1 to 3, which comprises from 0.01 to 15 parts by mass of a reactive compound with respect to a total of 100 parts by mass of the polybutylene terephthalate resin and the polyethylene terephthalate resin.

16. The resin composition according to any one of claims 1 to 3, wherein the reactive compound is an epoxy compound.

17. The resin composition according to any one of claims 1 to 3, which further comprises from 0.01 to 2.0 parts by mass of a stabilizer with respect to a total of 100 parts by mass of the polybutylene terephthalate resin and the polyethylene terephthalate resin.

18. The resin composition according to claim 1,

wherein the polyethylene terephthalate resin comprises a unit derived from an isophthalic acid, and the unit derived from the isophthalic acid is 0.5 mol% or more and 15 mol% or less of all units derived from a dicarboxylic acid component contained in the polyethylene terephthalate resin, the polyethylene terephthalate resin has an intrinsic viscosity of 0.60 dL/g or more,

the polyethylene terephthalate resin comprises a recycled product,
a content of a cyclic trimer contained in the polyethylene terephthalate resin is 0.8% by mass or less, and
the resin composition further comprises from 0.01 to 8 parts by mass of carbon black with respect to a total of
100 parts by mass of the polybutylene terephthalate resin and the polyethylene terephthalate resin.

19. A molded article formed from the resin composition of any one of claims 1 to 3 and 18.

20. A vehicle exterior component formed from the resin composition of any one of claims 1 to 3 and 18.

21. A light reflector component formed from the resin composition of any one of claims 1 to 3 and 18.

## INTERNATIONAL SEARCH REPORT

International application No.

**PCT/JP2022/044037**

### A. CLASSIFICATION OF SUBJECT MATTER

*C08L 67/02*(2006.01)i; *C08K 3/013*(2018.01)i; *C08K 7/04*(2006.01)i
FI:  C08L67/02 ZAB; C08K7/04; C08K3/013

According to International Patent Classification (IPC) or to both national classification and IPC

### B. FIELDS SEARCHED

Minimum documentation searched (classification system followed by classification symbols)

C08L67/02; C08K3/013; C08K7/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-23504 A (KONICA MINOLTA BUSINESS TECHNOLOGIES INC) 04 February 2013 (2013-02-04)<br>claims, paragraphs [0029], [0036], [0197], examples | 1-5, 9-13, 19-20 |
| Y | | 6-8, 14-18, 21 |
| X | JP 8-183114 A (POLYPLASTICS CO) 16 July 1996 (1996-07-16)<br>claims, paragraphs [0001], [0007], [0010]-[0011], examples | 1-2, 4, 6-9, 11-12, 14-17, 19-20 |
| Y | paragraphs [0007], [0010]-[0011] | 5, 10, 14-18, 21 |
| X | JP 2018-203932 A (WINTECH POLYMER LTD) 27 December 2018 (2018-12-27)<br>claims, paragraphs [0052]-[0053], [0060], examples | 1-2, 4-9, 11-12, 14, 17, 19-21 |
| Y | paragraphs [0046]-[0053], [0062] | 5-8, 10, 15-16, 18 |
| Y | JP 2003-335851 A (MITSUI CHEMICALS INC) 28 November 2003 (2003-11-28)<br>paragraph [0023] | 10, 18 |
| Y | WO 2017/038580 A1 (TOYOBO CO., LTD.) 09 March 2017 (2017-03-09)<br>paragraph [0004] | 21 |

☑ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/044037**

**C.    DOCUMENTS CONSIDERED TO BE RELEVANT**

| Category* | Citation of document, with indication, where appropriate, of the relevant passages | Relevant to claim No. |
|---|---|---|
| A | JP 2019-210429 A (TOYO SEIKAN CO., LTD.) 12 December 2019 (2019-12-12) paragraph [0003] | 1-21 |

Form PCT/ISA/210 (second sheet) (January 2015)

INTERNATIONAL SEARCH REPORT
Information on patent family members

International application No.

**PCT/JP2022/044037**

| Patent document cited in search report | | | Publication date (day/month/year) | Patent family member(s) | | | Publication date (day/month/year) |
|---|---|---|---|---|---|---|---|
| JP | 2013-23504 | A | 04 February 2013 | (Family: none) | | | |
| JP | 8-183114 | A | 16 July 1996 | (Family: none) | | | |
| JP | 2018-203932 | A | 27 December 2018 | CN | 110753729 | A | |
| JP | 2003-335851 | A | 28 November 2003 | (Family: none) | | | |
| WO | 2017/038580 | A1 | 09 March 2017 | US | 2018/0282539 | A1 | |
| | | | | paragraph [0004] | | | |
| | | | | US | 2018/0282538 | A1 | |
| | | | | CN | 107922717 | A | |
| | | | | TW | 201718761 | A | |
| | | | | CN | 108026358 | A | |
| JP | 2019-210429 | A | 12 December 2019 | (Family: none) | | | |

Form PCT/ISA/210 (patent family annex) (January 2015)

**REFERENCES CITED IN THE DESCRIPTION**

**Patent documents cited in the description**

- WO 2019217680 A
- JP 2018203932 A
- WO 2020246335 A
- JP 2017052925 A
- JP 2017052262 A
- JP 2018070722 A
- JP 2019123809 A
- JP 2021063196 A
- JP 2019 A
- JP 056035 A
- WO 2017038949 A
- JP 2021 A
- JP 101020 A
- JP 2019188393 A
- JP 2020199755 A
- JP 2020125468 A
- JP 6183822 B